(19) Europäisches Patentamt / European Patent Office / Office européen des brevets

(11) **EP 2 612 533 B1**

(12) **EUROPEAN PATENT SPECIFICATION**

(45) Date of publication and mention
of the grant of the patent:
**02.07.2014  Bulletin 2014/27**

(21) Application number: **10760624.6**

(22) Date of filing: **31.08.2010**

(51) Int Cl.:
**H04W 72/12** *(2009.01)*

(86) International application number:
**PCT/EP2010/062764**

(87) International publication number:
**WO 2012/028180 (08.03.2012 Gazette 2012/10)**

(54) **SCHEDULING FOR COORDINATED MULTI-CELL MIMO SYSTEMS**

PLANUNG FÜR KOORDINIERTE MEHRZELLIGE MIMOSYSTEME

ORDONNANCEMENT POUR DES SYSTÈMES MIMO À MULTIPLES CELLULES COORDONNÉES

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**10.07.2013  Bulletin 2013/28**

(73) Proprietor: **Fujitsu Limited
Kawasaki-shi, Kanagawa 211-8588 (JP)**

(72) Inventors:
• **XIAO, Hui
Uxbridge Middlesex UB10 0SW (GB)**

• **SARPERI, Luciano
Hayes Middlesex UB4 9QS (GB)**

(74) Representative: **Fenlon, Christine Lesley
Haseltine Lake LLP
Lincoln House, 5th Floor
300 High Holborn
London WC1V 7JH (GB)**

(56) References cited:
**WO-A1-2009/084877      WO-A1-2009/140898**

**Description**

The present invention relates to scheduling for coordinated multi-cell MIMO (multiple-input/multiple-output) systems.

Wireless communication systems are widely known in which a base station communicates with multiple subscriber stations or users within range of the base station. The area covered by one base station is called a cell and, typically, many base stations are provided in appropriate locations so as to cover a wide geographical area more or less seamlessly with adjacent cells. In conventional such cellular wireless networks the equipment of each user ("user equipment" or "UE") is only served by one base station (BS) at a time. However, this can result in low cell-edge data rates and coverage owing to high inter-cell interference at the cell-edge. To reduce the cell-edge interference it is beneficial to serve a cell-edge UE by multiple base stations; this is termed "multi-cell multiple-input/multiple-output" or "multi-cell MIMO". By using multi-cell MIMO the harmful interference from neighbouring cells can be turned into useful signals, thereby improving cell-edge throughput, system throughput and coverage. Standardization activities in both 3GPP and IEEE 802.16m (WiMAX) are considering multi-cell MIMO transmission, where scheduling coordination among multiple cells is used and these multiple cells may jointly transmit signals to a specific UE, in order to improve the data rates of cell-edge UEs.

In a cellular network, the optimal multi-cell cooperation strategy would require that all base stations (BSs) are inter-connected and form a single cooperation cluster. However, coordinating the multiple-input multiple-output (MIMO) transmissions among multiple base stations requires channel knowledge and data information to be shared among the coordinated base stations, resulting in additional requirements on the backhaul capabilities. Furthermore, for FDD systems, the channel knowledge is mainly obtained by UE feedback. Since multiple cells participate in the coordinated transmission, the amount of channel knowledge needed at the network side increases linearly with the number of cooperating cells, which will be a heavy burden for the uplink channel. Therefore, in practice, in order to relax the backhaul burden and improve the efficiency of cooperative multi-cell transmission, the whole network is divided into multiple cooperative clusters, each of which has a limited number of BSs to cooperatively serve UEs within each cooperative cluster. In such a case, it is necessary to determine which cells should be grouped together to form a cooperative cluster and which UEs in each cluster should be selected to be served.

Since in realistic systems only a limited number of BSs can cooperate in order for the amount of data/channel state information (CSI) sharing and complexity of implementations to be affordable, when using multi-cell MIMO transmission, finding the globally optimal scheduling decisions (i.e. selecting the optimal set of base stations and UEs served by those base stations) can be computationally very complex due to the large pool of cells and UEs to be considered. Therefore, it is desirable to develop sub-optimal scheduling strategies which reduce the scheduling complexity but still can achieve good performance.

The 3GPP standardisation body has identified coordinated multi-point transmission/reception (CoMP) as a key technology that is included in the LTE-A study item to improve the coverage of high data rates, the cell-edge throughput and/or to increase system throughput. Essentially CoMP is a coordinated multi-cell MIMO transmission/reception scheme, and according to the 3GPP LTE-A standardization process (3GPP TR 36.814 "Further advancements for E-UTRA physical layer aspects (Release 9)", V1.4.1, 2009-09) its downlink schemes are mainly characterized by two categories termed:

- "Coordinated scheduling and/or beamforming (CS/CB)" and
- "Joint Processing/Transmission (JP/JT)".

In the category of CS/CB, "data to a single UE is instantaneously transmitted from one transmission point, but user scheduling/beamforming decisions are made with coordination among cells corresponding to the CoMP cooperating set", while in the category of JP, "data to a single UE is simultaneously transmitted from multiple transmission points to (coherently or non-coherently) improve the received signal quality and/or cancel interference for other UEs" (3GPP TR 36.814 "Further advancements for E-UTRA physical layer aspects (Release 9)", V1.4.1, 2009-09).

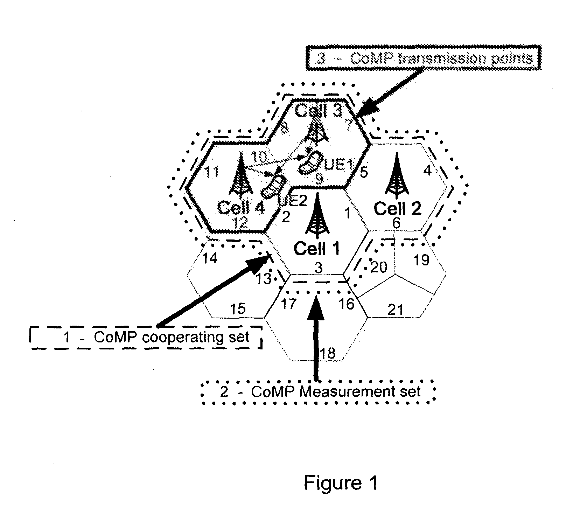

Figure 1 of the accompanying drawings illustrates a scheduling method for multi-cell MIMO systems with the aid of the terminology and definitions used in 3GPP LTE-A (3GPP TR 36.814 "Further advancements for E-UTRA physical layer aspects (Release 9)", V1.4.1, 2009-09). It should be noted that the LTE-A system serves purely as an example and the invention could be applied to any other cellular radio network supporting multi-cell MIMO transmission, such as IEEE 802.16m (WiMAX) or others.

In Figure 1 it is assumed that measurements for the set of cells 1, 2, 3 and 4, termed a "measurement set", are available for both user equipment UE1 and user equipment UE2. In the scheduling decision shown, cells 3 and 4 actively transmit to UE1 and UE2 (these are the transmission Points), while cells 1 and 2 may or may not be transmitting to other UEs during the transmission interval used by cells 3, 4. The set of cells 1, 2, 3 and 4 is termed a "CoMP Cooperating Set", since scheduling decisions within these cells are coordinated, although these cells need not necessarily transmit to the same set of UEs during a particular transmission interval. The numbers 1-21 along the sector edges represent the sector indices.

In the 3GPP standards contribution R1-091903 "Adaptive Cell Clustering for CoMP in LTE-A", Hitachi Ltd., 2009-05, a centralised cell clustering method for CoMP transmission is proposed, where all possible cell clusters are ranked according to inter-cluster interference. Next, the clusters are formed starting from the best cluster in terms of inter-cluster interference, subject to the cells not yet assigned to a cluster.

The 3GPP standards contribution R1-101431 "CoMP performance evaluation", Nokia Siemens Networks, 2010-02, discusses UE pairing for the single-cell case based on channel orthogonality between the UEs and multi-cell user pairing based on a theoretical capacity metric.

In WO2007083185A2 a method for scheduling in uplink single-cell multi-user MIMO (MU-MIMO) systems is disclosed. Users are paired for scheduling based on orthogonality of the channel transfer functions, which is a well known approach.

In US2009238292A1 a scheduling method for multi-cell coordination but with transmission from single-cells is disclosed. The scheduler decides on the target user sets corresponding to multiple base stations based on a sum data rate criterion, thereby considering inter-cell interference.

EP2051401A discloses a Precoding Matrix Information (PMI) coordination method for multiple cells but with transmission from a single-cell. It proposes to select the UEs to be scheduled in coordinated cells by considering the rank deficiency of the channel transfer function of the cell-centre UE.

In CN101389115A, a BS dynamic clustering and UE pairing approach is disclosed for multi-cell collaboration systems. The BS and UE collaboration sets are determined based on a two-way selection approach between UEs and BSs by using the received reference signal strength criterion.

WO2009024018A1 discloses a scheduling method to determine cooperating BSs for a UE in the multi-cell collaboration system. The scheduler collects UE feedback information regarding the interference power from multiple cells. The collaboration BSs to serve a UE are determined by using the threshold of difference between the received power from multiple BSs.

WO2009140898A1 discloses a method of scheduling coordination among cells in a cellular wireless network for use in MIMO communication with user equipment in the cells, in which a base station schedules active users according to the decisions made interfering base stations and the preferred transmission strategies of its own users.

In Agisilaos Papadogiannis, David Gesbert, and Eric Hardouin, "A dynamic clustering approach in wireless networks with multi-cell cooperative processing", International Conference on Communications (ICC) 2008, Beijing, China, May 2008, a dynamic clustering approach based on the criterion of maximizing the capacity of each cooperating cluster is proposed for multi-cell cooperation systems.

According to a first aspect of the present invention there is provided a method of scheduling coordination among cells in a cellular wireless network for use in multi-cell multiple-input/multiple-output communication with user equipment in the cells, wherein: a first scheduling process is carried out by a first scheduler local to a cell to select at least one user equipment, from amongst user equipment within the said cell, to be served by a coordinating group of cells in the network, and a second scheduling process, different from the first scheduling process, is carried out by a second scheduler associated with the said cell and with at least one other cell in the network, in which second scheduling process at least one such group of cells is selected to be a coordinating group of cells for serving the user equipment, selected by the first scheduling process, from amongst a measurement set of B cells in the network (where $B \geq 1$) for which measurements are sent by the selected user equipment; the second scheduling process comprising: a determining step in which it is determined which group $c_i$ of cells, from a set A consisting of all $C_B^{B_c}$ different possible groups of cells in the measurement set of a predetermined group size $B_c$ (where $B_c \leq B$), provides the largest value of a selection parameter $W(c_i)$, which selection parameter is dependent upon at least the long-term link power coupling weights $PW(c_i)$ and spatial correlation weights $d(c_i)$ between user equipment in the said group of cells, where $PW(c_i)$ is the sum of the long-term interference powers measured by each selected user equipment from the first scheduling process in the group $c_i$ in respect of all cells in group $c_i$, and $d(c_i)$ is determined on the basis of spatial correlation matrices derived from user equipment associated with each cell in the group $c_i$ on the basis of either explicit or implicit channel state information; and a selection step in which the group $c_i$ is selected to be a coordinating group of cells for the selected user equipment.

The long-term link power between each UE and each BS may be defined in an embodiment of the present invention as the received signal strength by considering only the large-scale fading effects of the channel on the transmitted signal, such as the path-loss and shadow fading.

Spatial correlation between UEs characterizes the correlation in the spatial structure information of the MIMO channels of different UEs, where the spatial structure information is provided by each UE in the form of either explicit or implicit CSI.

In a scheduling system and method embodying the present invention, the scheduling decision is based on a local (per base station) UE selection and a subsequent centralised UE pairing/cell clustering stage considering multiple cells. By decoupling the UE selection and UE pairing, the complexity of the scheduling algorithm is reduced effectively.

A method embodying the present invention can enable cooperative BSs and UEs to be clustered in a relatively simple way while still achieving good performance in system sum-rate for multi-cell multi-user (MU) MIMO transmission systems. In such a method a number of BSs can be grouped into multiple cooperating sets to serve UEs in each cooperating set based on coupling weights and channel transfer orthogonality between UEs in multiple cells. By considering the important factors contributing to the maximization of the sum-rate, such as the coupling weights and channel transfer orthogonality between UEs in multiple cells, the system sum-rate can be improved compared to when using fixed cooperating sets. The scheduling of UEs is based on a local (per BS) UE selection and a subsequent centralised UE pairing / cell clustering stage considering multiple cells. By decoupling the UE selection and UE pairing, the complexity of the scheduling algorithm is reduced effectively.

A method embodying the present invention uses a local and centralised decision process, while in 3GPP R1-091903 "Adaptive Cell Clustering for CoMP in LTE-A" only a centralised process is used. Furthermore, whereas 3GPP R1-091903 "Adaptive Cell Clustering for CoMP in LTE-A" relies on interference weights to select cells/UEs for CoMP scheduling, a method embodying the present invention relies on coupling weights and channel transfer orthogonality between UEs in multiple cells.

3GPP R1-101431 "CoMP performance evaluation" relies on a theoretical capacity expression to form cell clusters, whereas a method embodying the present invention relies on coupling weights and channel transfer orthogonality between UEs in multiple cells.

Compared to WO2007083185A2, where the orthogonality of the channel transfer function is measured using a different method and the scheduling method is designed for the single-cell scenario, in a method embodying the present invention measuring the orthogonality between MIMO channels is carried out using the Correlation Matrix Distance (CMD) metric, which can measure many different kinds of channel information, and the scheduling also relies on channel coupling weights between UEs in multiple cells.

Compared to US2009238292A1, which uses a sum-rate criterion, a method embodying the present invention indirectly maximises the system sum-rate relying on the channel coupling weight criterion and the orthogonality of the channel transfer function criterion.

Compared to EP2051401A, in which rank deficiency of the channel transfer function is explored to pair UEs for single-cell transmission scenarios, a method embodying the present invention indirectly utilises the orthogonality between UEs in multiple cells and the channel coupling weight criterion.

Compared to CN101389115A and WO2009024018A1, which are based on the received reference signal strength criterion and the threshold of difference between the received power from multiple BSs criterion respectively, a method embodying the present invention employs both coupling weight and spatial correlation weight criterion.

Furthermore, the dynamic clustering approach disclosed in Agisilaos Papadogiannis, David Gesbert, and Eric Hardouin, "A dynamic clustering approach in wireless networks with multi-cell cooperative processing" is based on the direct maximization of cluster capacity, but a method embodying the present invention uses the coupling weight and the channel transfer orthogonality criterion to indirectly maximize the system capacity.

In a method embodying the present invention, the first scheduling process may employ a scheduling criterion chosen from a group comprising round-robin scheduling, proportional fair scheduling and maximum rate scheduling.

A method embodying the invention desirably uses the Correlation Matrix Distance metric in calculating the spatial correlation weight $d(c_i)$.

In a method embodying the present invention, the selection parameter $W(c_i)$ may be equal to

$$\alpha \cdot \frac{PW(c_i)}{\sum_{c_i \in A} PW(c_i)} + \beta \cdot \frac{d(c_i)}{\sum_{c_i \in A} d(c_i)},$$

$\alpha$ and $\beta$ being weighting factors where $\alpha, \beta \in [0, 1]$, $\alpha \neq 0$, $\beta \neq 0$ and $\alpha + \beta = 1$.

When the number of antennas of the user equipment to be served by a group of cells is less than the total number of BS antennas in the group, the selection parameter $W(c_i)$ may also be dependent upon rank information from the user equipment to be served by that group. In this case the selection parameter $W(c_i)$ may be equal to

$$\alpha \cdot \frac{PW(c_i)}{\sum\limits_{c_i \in A} PW(c_i)} + \beta \cdot \frac{d(c_i)}{\sum\limits_{c_i \in A} d(c_i)} + \mu \cdot \frac{r(c_i)}{\sum\limits_{c_i \in A} r(c_i)}$$

$\alpha$, $\beta$ and $\mu$ being weighting factors where $\alpha$, $\beta$, $\mu \in [0, 1]$, $\alpha \neq 0$, $\beta \neq 0$, $\mu \neq 0$ and $\alpha+\beta+\mu=1$, $r(c_i)$ representing a transmission rank weight among the user equipment in the group $c_i$, where $r(c_i)$ may be the sum of rank information provided by each user equipment served by the cells in the group $c_i$.

The determining step of the second scheduling process may comprise ranking all $C_B^{B_c}$ groups in the set A in descending order according to the selection criterion $W(c_i)$; and identifying the first group in the rank as the group $c_i$. In this case, the second scheduling process carries out the determining and selection steps repeatedly to determine and select one or more further groups $c_i$ from the remaining possible groups of cells of group size $B_c$ until all possible coordinating groups of cells have been identified.

Alternatively, the determining step of the second scheduling process may comprise ranking all $C_B^{B_c}$ groups in the set A in descending order according to the selection criterion $W(c_i)$ and identifying the first group in the rank as the first coordinating group $c_i$, and then, for each remaining group in set A in turn, from the second group to the last group (i = 2 to $C_B^{B_c}$), identifying that group as another coordinating group if that group does not have any cell indices belonging to the or any previously-identified coordinating group.

According to a second aspect of the present invention there is provided scheduling apparatus for use in scheduling coordination among cells in a cellular wireless network in a multi-cell multiple-input/multiple-output communication scheme, which apparatus is configured for association with at least two cells in the network and is operable to select at least one group of cells, from amongst a measurement set of B cells in the network (where $B \geq 1$) for which measurements are sent by preselected user equipment, to be a coordinating group of cells for serving that user equipment, the scheduling apparatus comprising: determining means configured to determine which group $c_i$ of cells, from a set A consisting of all $C_B^{B_c}$ different possible groups of cells in the measurement set of a predetermined group size $B_c$ (where $B_c \leq B$), provides the largest value of a selection parameter $W(c_i)$, which selection parameter is dependent upon at least the long-term link power coupling weights $PW(c_i)$ and spatial correlation weights $d(c_i)$ between user equipment in the said group of cells, where $PW(c_i)$ is the sum of the long-term interference powers measured by each preselected user equipment in the group $c_i$ in respect of all cells in group $c_i$, and $d(c_i)$ is determined on the basis of spatial correlation matrices derived from user equipment associated with each cell in the group $c_i$ on the basis of either explicit or implicit channel state information; and selection means configured to select the group $c_i$ to be a coordinating group of cells for the preselected user equipment.

In such apparatus, the Correlation Matrix Distance metric may be used in calculating the spatial correlation weight $d(c_i)$.

The determining means may be configured to employ a selection parameter $W(c_i)$ equal to

$$\alpha \cdot \frac{PW(c_i)}{\sum\limits_{c_i \in A} PW(c_i)} + \beta \cdot \frac{d(c_i)}{\sum\limits_{c_i \in A} d(c_i)},$$

$\alpha$ and being weighting factors where $\alpha$, $\in [0,1]$, $\alpha \neq 0$, $\beta \neq 0$ and $\alpha+\beta=1$.

When the number of antennas of the user equipment to be served by a group of cells is less than the total number of BS antennas in the group, the selection parameter $W(c_i)$ may also be dependent upon rank information from the user equipment to be served by that group. In this case, the determining means may be configured to employ a selection parameter $W(c_i)$ equal to

$$\alpha \cdot \frac{PW(c_i)}{\sum\limits_{c_i \in A} PW(c_i)} + \beta \cdot \frac{d(c_i)}{\sum\limits_{c_i \in A} d(c_i)} + \mu \cdot \frac{r(c_i)}{\sum\limits_{c_i \in A} r(c_i)}$$

$\alpha$, $\beta$ and $\mu$ being weighting factors where $\alpha$, $\beta$, $\mu \in [0, 1]$, $\alpha \neq 0$, $\beta \neq 0$, $\mu \neq 0$ and $\alpha+\beta+\mu=1$, and $r(c_i)$ representing a transmission rank weight among the user equipment in the group $c_i$, where $r(c_i)$ may be the sum of rank information provided by each user equipment served by the cells in the group $c_i$.

The determining means may be operable to rank all $C_B^{B_c}$ groups in the set A in descending order according to the selection criterion $W(c_i)$ and identify the first group in the rank as the group $c_i$. In this case, the determining and selection means are operable to determine and select one or more further groups $c_i$ from the remaining possible groups of cells of group size $B_c$ until all possible coordinating groups of cells have been identified.

Alternatively, the determining means may be operable to rank all $C_B^{B_c}$ groups in the set A in descending order according to the selection criterion $W(c_i)$ and identify the first group in the rank as the first coordinating group $c_i$, and, for each remaining group in set A in turn, from the second group to the last group ($i = 2$ to $C_B^{B_c}$), to identify that group as another coordinating group if that group does not have any cell indices belonging to the or any previously-identified coordinating group.

According to a third aspect of the present invention there is provided a scheduling system for scheduling coordination among cells in a cellular wireless network for use in multi-cell multiple-input/multiple-output communication with user equipment in the cells, which system comprises: first scheduling apparatus local to a cell, which first scheduling apparatus is configured to carry out a first scheduling process to select at least one user equipment, from amongst user equipment within the said cell, to be served by a coordinated group of cells in the network, and second scheduling apparatus, associated with the said cell and with at least one other cell in the network, which second scheduling apparatus is configured to carry out a second scheduling process, different from the first scheduling process, in which at least one such group of cells is selected to be a coordinating group of cells for serving the user equipment, selected by the first scheduling process, from amongst B cells in the network (where $B \geq 1$) for which measurements are sent by the selected user equipment; the second scheduling process comprising: determining which group $c_i$ of cells, from a set A consisting of all $C_B^{B_c}$ different possible groups of cells in the measurement set of a predetermined group size $B_c$ (where $B_c \leq B$), provides the largest value of a selection parameter $W(c_i)$, which selection parameter is dependent upon at least the long-term link power coupling weights $PW(c_i)$ and spatial correlation weights $d(c_i)$ between user equipment in the said group of cells, where $PW(c_i)$ is the sum of the long-term interference powers measured by each selected user equipment from the first scheduling process in the group $c_i$ in respect of all cells in group $c_i$, and $d(c_i)$ is determined on the basis of spatial correlation matrices derived from user equipment associated with each cell in the group $c_i$ on the basis of either explicit or implicit channel state information; and selecting the group $c_i$ to be a coordinating group of cells for the preselected user equipment.

In such a system the first scheduling process may employ a scheduling criterion chosen from a group comprising round-robin scheduling, proportional fair scheduling and maximum rate scheduling.

Desirably, the base station of the said cell within which the selected user equipment is located serves as the said first scheduling apparatus. The base station may be operable to send to the second scheduling apparatus information regarding the long-term link power coupling weights and spatial correlation weights between user equipment in the said cell, where the information regarding long-term link power coupling weights comprises long-term interference powers measured by the user equipment and the information regarding spatial correlation weights comprises spatial correlation matrices derived from the user equipment. In such a base station the Correlation Matrix Distance metric may be used in calculating the spatial correlation weights. The base station may also be operable to send to the second scheduling apparatus rank information from user equipment in the said cell.

The second scheduling apparatus is preferably apparatus embodying the second aspect of the present invention.

According to a fourth aspect of the present invention there is provided a computer program which, when executed on a computer, causes that computer to become apparatus embodying the second aspect of the present invention, or part of a system embodying the third aspect of the present invention, or causes that computer to carry out a method embodying the first aspect of the present invention.

If explicit channel state information is used in an embodiment of the present invention in determining the spatial correlation matrices, it may for example be channel matrix, channel spatial correlation matrix, eigenvalues or eigenvectors of MIMO channels. If implicit channel state information is used in an embodiment of the present invention in determining the spatial correlation matrices, it may for example be Precoding Matrix Information (PMI).

Reference will now be made, by way of example, to the accompanying drawings, in which:

Figure 1 (described above) is a diagram for use in explaining a scheduling method for multi-cell MIMO systems;
Figure 2 illustrates a system model for use in understanding the present invention;
Figure 3(a) shows a flowchart illustrating a first method embodying the present invention;
Figure 3(b) shows a flowchart illustrating a second method embodying the present invention;
Figure 4 shows a diagram summarising a scheduling algorithm embodying the present invention;
Figure 5 illustrates a scheduling system embodying the present invention;
Figure 6 is a graph showing simulation results of a first part of a simulation scenario; and
Figure 7 is a graph showing simulation results of a second part of a simulation scenario.

In the following the terms cell and BS are used interchangeably, assuming that one BS serves one sector, but this need not be the case.

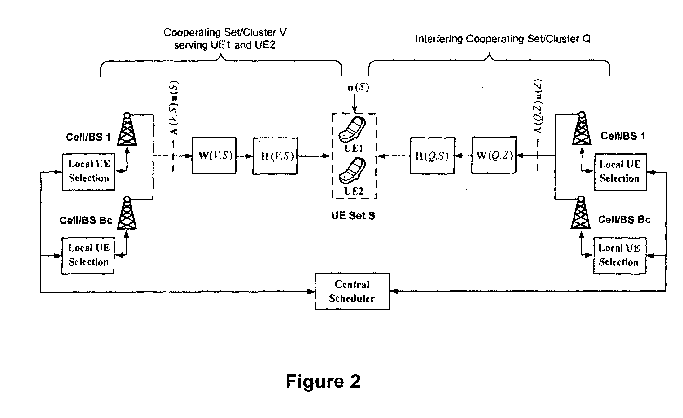

A method embodying the present invention can be understood by considering the following system model. In this example, it is assumed that the CoMP JP transmission mode is used. The whole network consists of $N$ BSs, which are divided into multiple measurement sets each being made up of $B$ BSs. For the BSs in a measurement set, $B_c$ BSs are used to form a BS cooperating set. Figure 2 shows a system model assuming two cooperating sets.

Each BS is equipped with $n_T$ antennas, and each UE has $n_R$ antennas. The maximum number of UEs $K_u$ that can be simultaneously served by a BS cooperating set is determined by $B_c$, $n_T$ and $n_R$ altogether, that is, $K_u = \left\lfloor \dfrac{B_c n_T}{n_R} \right\rfloor$.

Let $\Omega$ be the set of disjoint BS cooperating clusters within one measurement set, and $\Theta$ be the set of disjoint UE groups that are served by the $\Omega$ BS cooperating sets.

It is assumed that antennas belonging to the same BS cannot simultaneously participate in different cooperating sets within a given time-frequency resource block. A UE that belongs to a particular measurement set is able to measure channels of all the cells which belong to that measurement set. The measured channel information, such as explicit channel state information (CSI) (e.g. channel matrix, channel spatial correlation matrix, eigenvalues and eigenvectors of MIMO channels) or implicit CSI (eg. Precoding Matrix Information (PMI)), is fed back to the network by each UE, based on which the multi-cell MU scheduling algorithm can be applied to form multiple BS cooperating sets to serve UEs that are assigned to these BS cooperating sets.

It is reasonable to assume that the formation of the measurement set is determined by the network on a long-term basis. Since a method embodying the present invention is performed on per measurement set basis, in the following it is illustrated by using the BSs and UEs in one measurement set. Linear precoding is considered within each BS cooperating set since it provides a good trade-off between performance and complexity. Let $S$ ($S \in \Theta$) be the set of UEs scheduled to be served at a specific time slot by the BS cooperating set $V$ ($V \in \Omega$). For downlink multi-cell MU MIMO transmissions, the received signal of the UEs being served by one BS cooperating set can be represented as follows:

$$\begin{aligned}
\mathbf{y}(S) &= \mathbf{H}(V,S)\mathbf{W}(V,S)\mathbf{A}(V,S)\mathbf{u}(S) \\
&+ \sum_{Q \neq V, Q \in \Omega} \mathbf{H}(Q,S)\mathbf{W}(Q,Z)\mathbf{A}(Q,Z)\mathbf{u}(Z) + \mathbf{n}(S)
\end{aligned} \tag{1}$$

where $\mathbf{H}(V, S)$ is the $n_R K_u \times n_T B_c$ channel matrix related to the BS cooperating set $V$ and the UE cooperating group $S$, which is composed of channel matrices between each cooperating UE and all BSs in the cooperating set and can be expressed as:

$$\mathbf{H}(V,S) = \left[\mathbf{H}_1^T(V), \mathbf{H}_2^T(V), ..., \mathbf{H}_{K_u}^T(V)\right]^T \tag{2}$$

where $\mathbf{H}_i(V)$ is the $n_R \times n_T B_c$ channel matrix of the $i$-th UE served by the BS cooperating set $V$. Although a method embodying the present invention can be applied to both single UE antenna and multiple UE antenna systems, in the following we assume each UE has a single antenna ($n_R = 1$) for demonstration simplicity.

Therefore, $\mathbf{H}(V, S)$ can be rewritten as:

$$\mathbf{H}(V, S) = \left[ \mathbf{h}_1^T (V), \mathbf{h}_2^T (V), \ldots, \mathbf{h}_{K_u}^T (V) \right]^T \tag{3}$$

where $\mathbf{h}_i(V)$ is the channel vector of size $1 \times n_T B_c$ between the $i$-th UE served by the BS cooperating set $V$.

In equation (1), $\mathbf{W}(V, S)$ is the linear precoding matrix, if each UE is equipped with a single antenna, then the size of $\mathbf{W}(V, S)$ is $n_T B_c \times K_u$. The precoding matrix $\mathbf{W}(V, S)$ can be written as:

$$\mathbf{W}(V, S) = \left[ \mathbf{w}_1 (V), \mathbf{w}_2 (V), \ldots, \mathbf{w}_{K_u} (V) \right] \tag{4}$$

where $\mathbf{w}_i(V)$ is the $n_T B_c \times 1$ precoder for the $i$-th UE in the UE cooperating group $S$. The precoding matrix is chosen to meet the Zero-Forcing criterion, $\mathbf{H}(V, S)\mathbf{W}(V, S) = \mathbf{I}_{K_u}$, where $\mathbf{I}_{K_u}$ is the identity matrix with the dimension equal to the number of served UEs by a BS cooperating set. Therefore the selected precoding matrix is the Moore-Penrose pseudoinverse of the channel matrix,

$$\mathbf{W}(V, S) = \mathbf{H}^H (V, S)\left[ \mathbf{H}(V, S)\mathbf{H}^H (V, S) \right]^{-1} \tag{5}$$

Note that other choices of precoding (MMSE etc.) can be considered. In practice each column of $\mathbf{W}(V, S)$ is normalised to unity.

$\mathbf{A}(V, S)$ represents the diagonal power allocation matrix related to the UE group $S$ served by the BS cooperating set $V$. Realistic per-antenna power constraints are considered. It is assumed that each transmitter antenna has an average power constraint $P$. Thus, $\left[ \mathbf{W}(V, S)\mathbf{W}^H (V, S) \right]_{ii} \left[ \mathbf{A}(V, S) \right]_{ii}^2 \leq P$. In order to guarantee that the power constraints on each antenna are always met, the power allocation matrix is:

$$\mathbf{A}(V, S) = \sqrt{P \Big/ \max_{k=1,\ldots,n_T B_c} \left\| \mathbf{W}^{[k]}(V, S) \right\|_F^2} \times \mathbf{I}_{K_u} \tag{6}$$

where $\mathbf{W}^{[k]}(V, S)$ is the row vector of $\mathbf{W}(V, S)$ which corresponds to the $k$-th antenna within the BS cooperating set $V$.

In equation (1), $\sum_{Q \neq V, Q \in \Omega} \mathbf{H}(Q, S)\mathbf{W}(Q, Z)\mathbf{A}(Q, Z)\mathbf{u}(Z)$ represents the detrimental inter-cluster co-channel interference (CCI) from all the other BS cooperating sets, $\mathbf{u}(S)$ is a vector of independent complex Gaussian transmit symbols with unit variance, i.e. $E\{\mathbf{u}\mathbf{u}^H\} = \mathbf{I}_{K_u}$, and $\mathbf{n}(S)$ is a vector of independent complex circularly symmetric additive Gaussian noise components $n \sim NC(0, \sigma^2)$, hence $E\{\mathbf{n}\mathbf{n}^H\} = \sigma^2 \mathbf{I}_{K_u}$.

Therefore, the signal to interference plus noise ratio (SINR) of the $i$-th UE, where $i \in S$, when linear precoding is employed is

$$SINR_i = \frac{[\mathbf{A}(V, S)]_{ii}^2 |\mathbf{h}_i(V)\mathbf{w}_i(V)|^2}{\sum_{j \neq i, j \in S} [\mathbf{A}(V, S)]_{ii}^2 |\mathbf{h}_i(V)\mathbf{w}_j(V)|^2 + \sum_{\substack{Q \neq V \\ Q \in \Omega}} \sum_{\substack{j \in Z \\ Z \neq S}} [\mathbf{A}(Q, Z)]_{ll}^2 |\mathbf{h}_i(Q)\mathbf{w}_j(Q)|^2 + \sigma^2} \tag{7}$$

where $\mathbf{h}_i(Q)$ represents the interfering channel vector from the BS cooperating set $Q$ to the $i$-th UE in the UE group $S$, and $\mathbf{W}_l(Q)$ is the precoder for the $l$-th UE within the UE group $Z$ that is served by the BS cooperating set $Q$. Therefore, the term $\sum_{j \neq i, j \in S} [\mathbf{A}(V,S)]_{jj}^2 |\mathbf{h}_i(V)\mathbf{w}_j(V)|^2$ corresponds to the intra-cluster interference, and the

part $\sum_{\substack{Q \neq V, \\ Q \in \Omega}} \sum_{\substack{l \in Z, \\ Z \neq S}} [\mathbf{A}(Q,Z)]_{ll}^2 |\mathbf{h}_i(Q)\mathbf{w}_l(Q)|^2$ represents the inter-cluster interference. With zero-forcing precoding intra-cluster interference is eliminated, but the inter-cluster interference still exists.

The evaluation metric is the averaged achieved sum-rate of one measurement set, which is given by the following expression

$$C = E_H \left\{ \sum_{S \in \Theta} \sum_{i \in S} \log_2 (1 + SINR_i) \right\} \quad (8)$$

Analysing equations (7) and (8) together, some factors that are important to improving the system sum-rate can be identified. Obviously, increasing the transmission power only can help improve the system sum-rate to some level. However, once the system becomes interference limited, the improvement in system sum-rate will diminish. Besides the factor of transmission power, the properties of MU-MIMO channels have close relationships with the system sum-rate. From the long-term fading perspective, it is helpful to the system sum-rate if each UE has a strong channel link to its serving BS cooperating cluster and weak channel links to all the interfering BS cooperating clusters. From the spatial structure's viewpoint, for the UEs that have strong channel links to a certain BS cooperating cluster, the more uncorrelated are the spatial structures of those UEs' MIMO channels with respect to that BS cooperating set, the more independent data streams can be transmitted to those UEs, hence the sum-rate can be improved.

Therefore, both the long-term fading properties and spatial structure properties of MIMO channels are considered when designing a multi-cell MU scheduler which embodies the present invention to improve the system sum-rate.

A method embodying the present invention employs a scheduling algorithm which is dependent upon a long-term link power coupling weight and spatial correlation weight, as will now be described.

Considering firstly the long-term link power coupling weight, as assumed above, each UE can measure channel information based on the reference signals from all BSs in its measurement set. The long-term link power between each UE and each BS is defined as the received signal strength by only considering the large-scale fading effects of the channel on the transmitted signal, such as the path-loss and shadow fading. Let the long-term link power measured by a UE $i$ be denoted as:

$$LP_i = \left[ LP_{i1}, LP_{i2}, LP_{i3}, ...LP_{ij}..., LP_{iB} \right] \quad (9)$$

where the $1 \times B$ link power vector $LP_i$ includes the long-term link power weights between UE $i$ and each of the BSs in its measurement set. For the UEs associated with BS $x$, the long-term interference power received from BS $y$ is denoted as $IP_{xy}$. For example, in the case that UE $i$ and $k$ are associated with BS $x$, the long-term interference power obtained from BS $y$ for these two UEs is calculated as:

$$IP_{xy} = LP_{iy} + LP_{ky} \quad (10)$$

Based on (10), the long-term link power coupling weight between BS $x$ and BS $y$ is defined as:

$$PW_{xy} = IP_{xy} + IP_{yx} \quad (11)$$

which represents the sum of long-term link power of UEs associated with BS $x$ but interfered by BS $y$ and UEs associated with BS *y* but interfered by BS *x*.

Considering now the spatial correlation weight, spatial correlation between UEs characterizes the correlation in the spatial structure information of different UE's MIMO channels, where the spatial structure information is provided by each UE in the form of either explicit or implicit CSI. Let the channel spatial structure information that does not take into account the long-term fading factors measured by a UE *i* be denoted as:

$$\mathbf{\Psi}_i = \left[\mathbf{\Phi}_{i1}, \mathbf{\Phi}_{i2}, \mathbf{\Phi}_{i3}, ... \mathbf{\Phi}_{ij} ..., \mathbf{\Phi}_{iB}\right] \qquad (12)$$

where $\Psi_i$ and $\Phi_{ij}$ represent various kinds of channel spatial structure information, e.g. explicit channel state information, or implicit CSI such as PMI. $\Psi_i$ is the $1 \times n_T B$ concatenated channel information vector between UE *i* and all BSs in its measurement set. $\Phi_{ij}$ is the $1 \times n_T$ channel information vector between UE *i* and each individual BS in its measurement set. Therefore, for a certain UE that is served by a BS cooperating cluster *V*, its $1 \times n_T B_c$ spatial structure information vector is represented by:

$$\mathbf{\Psi}_i(V) = \left[\mathbf{\Phi}_{i1}(V), \mathbf{\Phi}_{i2}(V), ... \mathbf{\Phi}_{ij}(V) ..., \mathbf{\Phi}_{iB_C}(V)\right] \qquad (13)$$

In (13), if explicit channel state information is fed back by each UE to the network, then $\Psi_i(V)$ is composed of multiple channel vectors with respect to each individual cooperating BS. However, if implicit channel spatial structure information is fed back such as PMI, then $\Psi_i(V)$ represents the PMI vector with respect to the entire BS cooperating set.

In order to measure the similarity in the spatial structure information such as channel state information or PMI information, the *Correlation Matrix Distance* (CMD) metric (see M. Herdin, N. Czink, H. Ozcelik, and E. Bonek "Correlation matrix distance, a meaningful measure for evaluation of non-stationary MIMO channels", IEEE 61st Vehicular Technology Conference 2005 (VTC Spring 2005), Stockholm, Sweden, vol. 1, May 2005, pp. 136-140) is adopted. The CMD is the distance between two spatial correlation matrices of MIMO channels $\mathbf{R}_1$ and $\mathbf{R}_2$ as defined by:

$$d(\mathbf{R}_1, \mathbf{R}_2) = 1 - \frac{tr\{\mathbf{R}_1 \mathbf{R}_2\}}{\|\mathbf{R}_1\|_F \|\mathbf{R}_2\|_F} \quad \in [0,1] \qquad (14)$$

where the spatial correlation matrix at the transmitter side is calculated as:

$$\mathbf{R}_{Tx} = E\{\mathbf{H}^T \mathbf{H}^*\} \qquad (15)$$

where **H** is a generic example of the $n_R \times n_T$ MIMO channel matrix.

The CMD value ranges between zero and one: when the spatial correlations are identical (apart from a scalar factor), the CMD is zero, while the maximum value is one if they are completely uncorrelated. The CMD metric allows the orthogonality between two considered correlation matrices to be measured by a single parameter while it compares both the singular values and the subspaces of the matrices. To employ the CMD metric in the present example, some adaptations are made, including: (1) Replacing **H** in (15) with $\Psi_i(V)$; (2) Removing the expectation operator in (15), thereby using the instantaneous spatial correlation matrices in (14) rather than the averaged version. The instantaneous spatial correlation matrix is only used as an example, and it should be understood that the invention also applies to the case where the averaged version is used. In the case that $\Psi_i(V)$ itself represents the channel spatial correlation matrix that is fed back by the UE, the calculation based on equation (15) is not required, and $\Psi_i(V)$ should be directly used in equation (14) to calculate the CMD.

Based on the assumption that the system uses the CoMP JP transmission mode, the spatial structure correlation weight between UEs that are associated with BS *x* and BS *y* is defined as:

$$d_{xy}^{JP}\left(\Xi_x, \Xi_y\right) = 1 - \frac{tr\left\{\Xi_x \Xi_y\right\}}{\left\|\Xi_x\right\|_F \left\|\Xi_y\right\|_F} \quad \in [0,1] \qquad (16)$$

where $\Xi_x$ and $\Xi_y$ are the spatial correlation matrices derived from UEs associated with BS $x$ and BS $y$ respectively, and they are calculated by:

$$\Xi_x = \Psi_x \Psi_x^H \qquad (17)$$

and

$$\Xi_y = \Psi_y \Psi_y^H \qquad (18)$$

respectively, where

$$\Psi_x = \left[\Psi_1^T(V) \ \Psi_2^T(V)\right] \qquad (19)$$

$$\Psi_y = \left[\Psi_3^T(V) \ \Psi_4^T(V)\right] \qquad (20)$$

assuming that UE1 and UE2 are associated with BS $x$ and UE3 and UE4 are associated with BS $y$.

Furthermore, to demonstrate how to calculate the spatial correlation weight among UEs from more than 2 BSs, an example is given for the case that UEs are from 3 BSs:

Firstly, the spatial structure correlation weight $d_{xy}^{JP}$ between UEs that are associated with BS $x$ and BS $y$ is calculated by using (16) to (20);

Secondly,

$$d_{xy,z}^{JP}\left(\Xi_{xy}, \Xi_z\right) = 1 - \frac{tr\left\{\Xi_{xy} \Xi_z\right\}}{\left\|\Xi_{xy}\right\|_F \left\|\Xi_z\right\|_F} \quad \in [0,1] \qquad (21)$$

where $\Xi_{xy}$ represents the spatial correlation matrix derived form UEs that are associated with BS $x$ and BS $y$, assuming that UE1 and UE2 are associated with BS $x$ and UE3 and UE4 are associated with BS $y$, i.e.

$$\Xi_{xy} = \Psi_{xy} \Psi_{xy}^H \qquad (22)$$

where

$$\Psi_{xy} = \left[ \Psi_1^T(V) \; \Psi_2^T(V) \; \Psi_3^T(V) \; \Psi_4^T(V) \right] \tag{23}$$

and where $\Xi_z$ stands for the spatial correlation matrix derived from UEs associated with BS $z$, assuming that UE5 and UE6 are associated with BS $z$, then

$$\Xi_z = \Psi_z \Psi_z^H \tag{24}$$

and

$$\Psi_z = \left[ \Psi_5^T(V) \; \Psi_6^T(V) \right] \tag{25}$$

Thirdly, the total spatial correlation weight among UEs from 3 BSs is given by:

$$d_{xyz}^{JP} = d_{xy}^{JP} + d_{xy,z}^{JP} \quad \in [0,2] \tag{26}$$

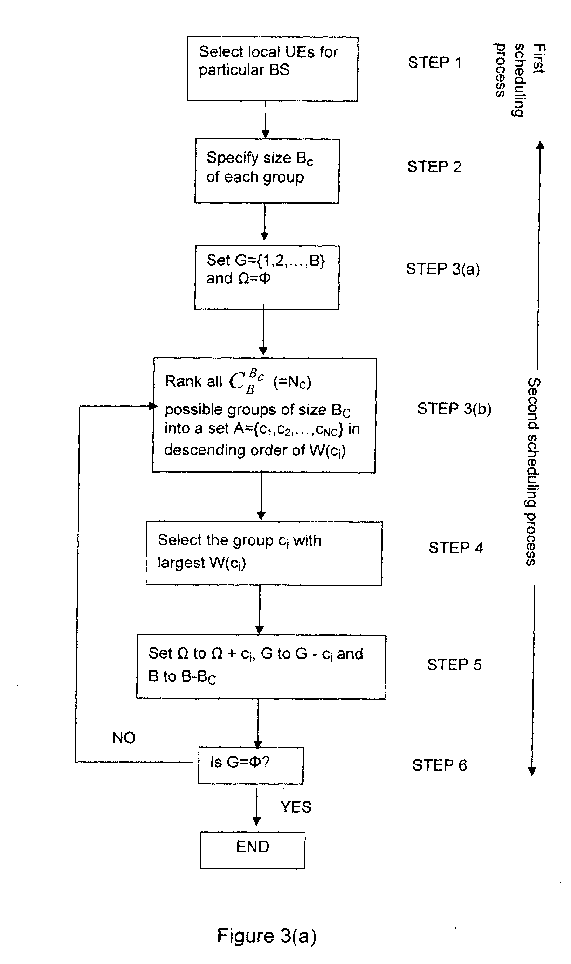

Figure 3(a) is a flowchart illustrating a first method embodying the present invention. The proposed scheduling algorithm is based on a local (per BS) UE selection and a subsequent centralised UE pairing stage considering multiple cells, which decouples the UE selection and UE pairing processes. It is assumed that UEs are associated with the BSs that they receive the strongest large-scale power from. The BS set that includes the BSs not being clustered is denoted as $G$, and $\Omega$ is used to denote the clustered BS cooperating set. The method comprises the following steps:

1) **Step 1:**

Select local (per BS) UEs to be served at a time slot by using known single cell scheduling criterion, such as round-robin, proportional fair, and maximum rate. The number of UEs selected per BS is equal to

$$N_u = \left\lfloor \frac{n_T}{n_R} \right\rfloor .$$

2) **Step 2:**

Specify the BS cooperating cluster size $B_c$.

3) **Step 3:**

(**a**) Set $G = \{1,2,3,..., B\}$, and $\Omega = \phi$.

(**b**) The network central scheduler ranks all the $C_B^{B_c}$ possible cooperating clusters of size $B_c$ into a set

$A = \{c_1, c_2, ... c_{N_c}\}$ (where $N_c = C_B^{B_c}$) in a descending order according to the comprehensive coupling weight and spatial correlation weight criterion, which is:

$$W_{PC}(c_i) = \alpha \cdot \frac{PW(c_i)}{\sum\limits_{c_i \in A} PW(c_i)} + \beta \cdot \frac{d(c_i)}{\sum\limits_{c_i \in A} d(c_i)}, \qquad (27)$$

$\alpha, \beta \in [0,1]$ and $\alpha + \beta = 1$

where $\alpha$ and $\beta$ are weighting factors for the long-term link power coupling weight criterion and the spatial correlation weight criterion respectively, $PW(c_i)$ represents the long-term link power coupling weight derived from the BSs in cluster $C_i$, and $d(c_i)$ stands for the spatial correlation weight among the UEs in the BS cooperating cluster $c_i$.

4) **Step 4:**

The $c_i$ that has the largest $W_{PC}$ is formulated as one BS cooperating cluster.

5) **Step 5:**

Set $\Omega = \Omega + c_i$, $G = G - c_i$, and $B = B - B_c$.

6) **Step 6:**

Determine if $G = \phi$. If YES, terminate the algorithm. If NO, repeat **Step 3(b)** to **Step 5**.

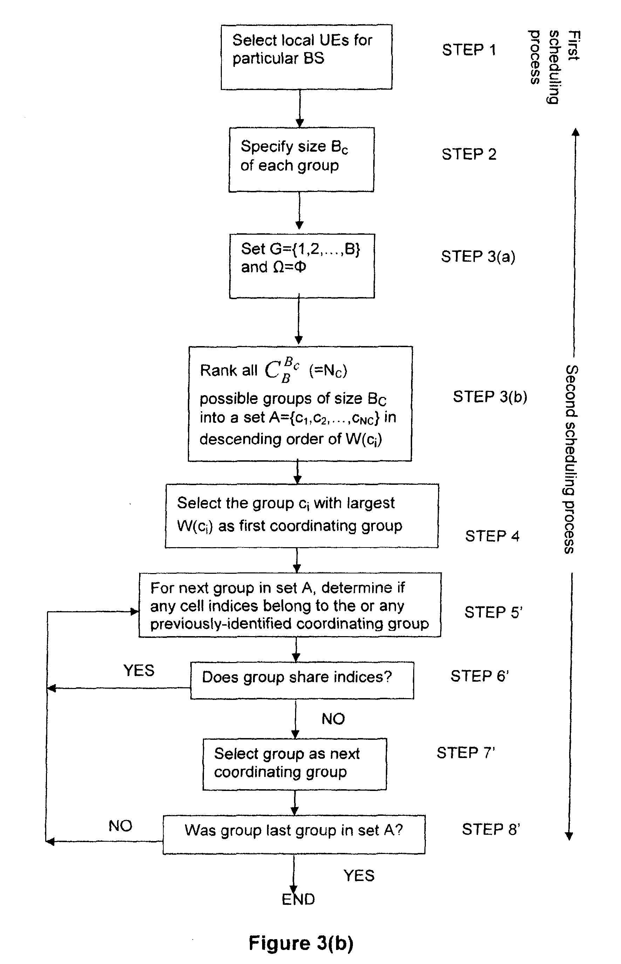

Alternatively, as shown in Figure 3(b), **Steps 5** and **6** may be replaced by **Steps 5'** to **8'**, whereby all possible cooperating clusters may be formed without repeating the ranking step. In **Steps 5'** to **8'**, for each remaining group in set A in turn, looping from the second group to the last group $(i = 2$ to $C_B^{B_c})$, if a group does not have any cell indices belonging to the or any previously-identified cooperating cluster, that group is identified as another cooperating cluster. In **Step 8'**, when the group is the last group in set A $(i = C_B^{B_c})$, the algorithm is terminated.

Although the proposed scheduling algorithms are illustrated based on the CoMP JP system model, they are also applicable to the CoMP CS/CB scenarios. This is because, in the case of CoMP CS/CB transmission where the data transmitted to a UE is only from one serving BS but the precoding/scheduling is coordinated among cells within a BS cooperating set, reducing the inter- and intra-cluster interference and increasing the spatial orthogonality between the UEs' serving channels and the UEs' interfering channels obtained from the other cells within the BS cooperating set are also very critical to the improvement of the system sum-rate. However, when applying the proposed scheduling algorithm to the CoMP CS/CB scenarios, it should be noted that the way to calculate the spatial correlation weight in (27) is different from that for the CoMP JP scenarios. That is, in the case of CoMP downlink CS/CB transmission, the spatial correlation weight between UEs that are associated with BS $x$ and BS $y$ is defined as: the spatial correlation weight generated from the interfering channels from BS $x$ to the UEs associated with BS $y$ and the serving channels from BS $y$ to the UEs associated with BS $y$, plus the spatial correlation weight obtained from the interfering channels from BS $y$ to the UEs associated with BS $x$ and the serving channels from BS $x$ to the UEs associated with BS $x$. To be specific:

$$d_{xy}^{CSB} = d\big(\Xi_y(x), \Xi_y(y)\big) + d\big(\Xi_x(y), \Xi_x(x)\big) \in [0,2] \qquad (28)$$

where $\Xi_y(x)$ represents the spatial correlation matrix generated by using the interfering channels given by BS $x$ to the UEs associated with BS y, $\Xi_y(y)$ represents the spatial correlation matrix obtained from using the serving channels given by BS $y$ to the UEs associated with it; $\Xi_x(y)$ and $\Xi_x(x)$ have similar meanings to $\Xi_y(x)$ and $\Xi_y(y)$ respectively. Assuming UE1 and UE2 are associated with BS $x$ and UE3 and UE4 are associated with BS $y$, therefore

$$\Xi_y(x) = \Psi_y(x)\Psi_y^H(x) \qquad (29)$$

where

$$\Psi_y(x) = \left[\Psi_3^T(x) \ \Psi_4^T(x)\right] ,$$ (30)

$$\Xi_y(y) = \Psi_y(y)\Psi_y^H(y)$$ (31)

where

$$\Psi_y(y) = \left[\Psi_3^T(y) \ \Psi_4^T(y)\right] ,$$ (32)

$$\Xi_x(y) = \Psi_x(y)\Psi_x^H(y)$$ (33)

where

$$\Psi_x(y) = \left[\Psi_1^T(y) \ \Psi_2^T(y)\right]$$ (34)

$$\Xi_x(x) = \Psi_x(x)\Psi_x^H(x)$$ (35)

and
where

$$\Psi_x(x) = \left[\Psi_1^T(x) \ \Psi_2^T(x)\right]$$ (36)

In the case of CoMP CS/CB uplink transmission, the spatial correlation weight between UEs that are associated with BS $x$ and BS $y$ is defined as:

$$d_{xy}^{CSB} = d\left(\Xi_x(y), \Xi_y(y)\right) + d\left(\Xi_y(x), \Xi_x(x)\right) \quad \in [0,2]$$ (37)

where $\Xi_x(y)$, $\Xi_y(y)$, $\Xi_y(x)$ and $\Xi_x(x)$ have the same definitions as those given by (29) to (36). When calculating the spatial correlation weight among UEs from more than 2 BSs, firstly the spatial correlation weight between UEs from any pair of BSs is calculated by using equation (28) or (37) (and (29) to (36)), and then the total spatial correlation weight is the sum of the individual spatial correlation weight between each pair of BSs.

To sum up, for the two CoMP cases, i.e. CoMP JP and CoMP CS/CB, there is no difference in using the coupling weight criterion. However, when using the spatial correlation weight criterion, the spatial correlation weight should be calculated according to the different CoMP cases.

For the situations where the UEs that are to be served by a BS cooperating set have fewer antennas than the total number of antennas at a BS cooperating set, the number of independent data streams transmitted by a BS cooperating set is smaller than the total number of antennas at a BS cooperating set. In such cases, in addition to the coupling weight and the spatial correlation weight criteria, a third criterion may be used for the UE pairing and cell clustering. The third criterion is termed transmission rank criterion, which uses the rank information fed back by each UE to estimate the potential capability to support multiple independent data stream transmissions by a BS cooperating set. The rank information fed back by a UE could be in various forms, for example, the rank indicator (RI) adopted by the 3GPP LTE system is one kind of such information. In the case of CoMP JP, the rank information associated with each UE is with respect to each BS cooperating set, and in the case of CoMP CS/CB, the rank information associated with a UE is with respect to its serving BS within a certain BS cooperating set. Therefore, according to this modified embodiment, the comprehensive scheduling criterion considering the transmission rank factor is proposed as follows:

$$W_{PCR}(c_i) = \alpha \cdot \frac{PW(c_i)}{\sum_{c_i \in A} PW(c_i)} + \beta \cdot \frac{d(c_i)}{\sum_{c_i \in A} d(c_i)} + \mu \cdot \frac{r(c_i)}{\sum_{c_i \in A} r(c_i)}, \qquad (38)$$

$\alpha, \beta, \mu \in [0,1]$ and $\alpha + \beta + \mu = 1$

where $r(C_i)$ represents the total number of independent data streams that can be potentially supported by the BS cooperating cluster $C_i$, and

$$r(c_i) = \sum_{j=1}^{K_a} rank_j \qquad (39)$$

where $rank_j$ denote the rank information given by the UE $j$ within the BS cooperating set $C_i$, and $K_a$ represents the number of actually served UEs by the BS cooperating set $C_i$.

Generally, the weighting factors $\alpha$, $\beta$ and $\mu$ in equations (27) and (38) need to be optimized for a particular network geometry. For example, if the distance between cooperative BSs is small, then the spatial correlation weight factor $\beta$ should be larger than the coupling weight factor $\alpha$, because it is more likely that the channels are spatially correlated than that the coupling weight is small. The determination of the factor $\mu$ could be based on whether there exist cooperative groups in which the selected UEs to be served have fewer antennas than the total number of BS antennas in a group; if there exist such kind of cooperative groups, then the third criterion should be switched on and set as a relatively high value, otherwise, the third criterion is not needed and can be set as zero.

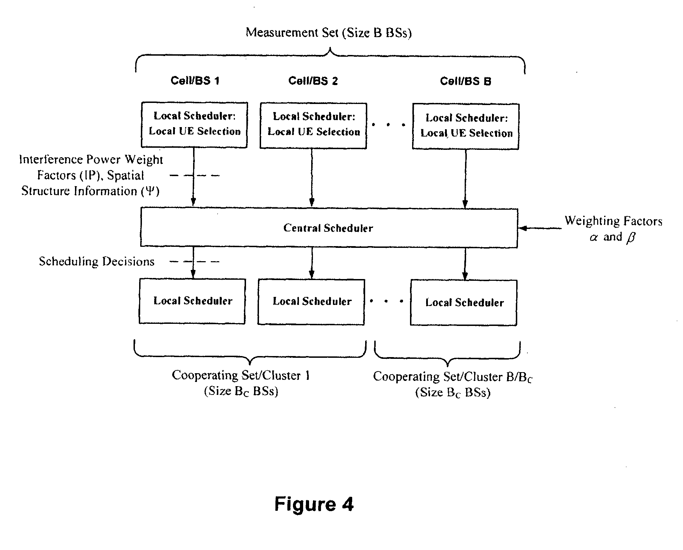

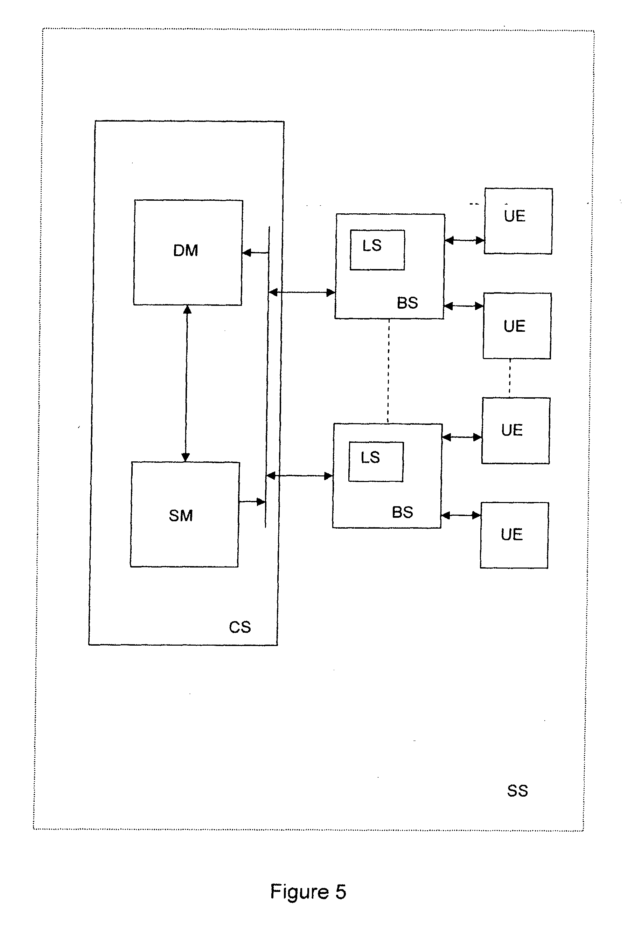

The proposed scheduling algorithm is summarised in the diagram of Figure 4. Figure 5 shows a scheduling system SS embodying the present invention which comprises first and second scheduling apparatus LS, CS. The first scheduling apparatus LS is local to each base station BS and is configured to carry out a first scheduling process to select at least one user equipment UE, from amongst user equipment UE within a cell served by the base station BS, to be served by a coordinated group of base stations/cells in the network. The second scheduling apparatus CS is a centralised scheduler associated with the cell and with at least one other cell in the network and has determining means DM and selection means SM configured to carry out a second scheduling process, different from the first scheduling process, in which at least one such group of cells is selected to be a coordinating group of cells for serving the user equipment UE, selected by the first scheduling process, from amongst B cells in the network (where B ≥ 1) for which measurements are sent by the selected user equipment UE. The scheduling system is configured to carry out the method illustrated in Figure 3(a) or 3(b) and Figure 4. In particular, the determining means DM are configured to determine which group $c_i$ of cells, from a set A consisting of all $C_B^{B_c}$ different possible groups of cells in the measurement set of a predetermined group size $B_c$ (where $B_c \le B$), provides the largest value of the selection parameter W($c_i$) (equation (27) or (38)), and the selection means SM are configured to select the group $c_i$ to be a coordinating group of cells for the user equipment selected by the first scheduling process. The determining means DM may be operable to rank all $C_B^{B_c}$ groups in the set A in descending order according to the selection criterion W($c_i$) and identify the first group in the rank as the group $c_i$. In this case, the determining means DM and selection means SM may be operable to determine and select one or more further groups $c_i$ from the remaining possible groups of cells of group size $B_c$ until all possible coordinating groups of cells have been identified. Alternatively, the determining means DM may be operable to rank all $C_B^{B_c}$ groups in the set A in descending order according to the selection criterion W($c_i$) and identify the first group in the rank as the first coordinating group $c_i$, and, for each remaining group in set A in turn, from the second group to the

last group $(i = 2 \text{ to } C_B^{B_c})$, to identify that group as another coordinating group if that group does not have any cell indices belonging to the or any previously-identified coordinating group.

Monte-Carlo simulations were used to evaluate the performance of the proposed scheduling method. The evaluation is divided into two parts: in the first part, the validity of the proposed spatial correlation weight criterion, which is based on the CMD metric, is evaluated by using generic Rayleigh fading MIMO channels; in the second part, the performance of the proposed scheduling method in terms of the averaged system sum-rate is compared with that by using the fixed clustering approach. The simulation parameters used for the evaluations in the first and second parts are shown in Table 1 and Table 2 respectively. It should be noted that for the second part the term sector is used, which is equivalent to the terms cell or BS used throughout the specification.

Part 1:

The following simulation scenario is used to verify the impact of spatial correlation between UEs' channels on the system sum-rate. Two cases with different spatial correlation weights are simulated: in one case UEs served by one BS cooperating set are selected in such a way that the CMD value derived from MIMO channel matrices belonging to UEs that are associated with different BSs is in the range of 0.9 to 1.0, which corresponds to the low spatial correlation scenario; the other case represents the high spatial correlation scenario, where UEs from different cells are paired in such a way that the CMD value derived from MIMO channel matrices belonging to UEs that are associated with different BSs is in the range of 0.1 to 0.2.

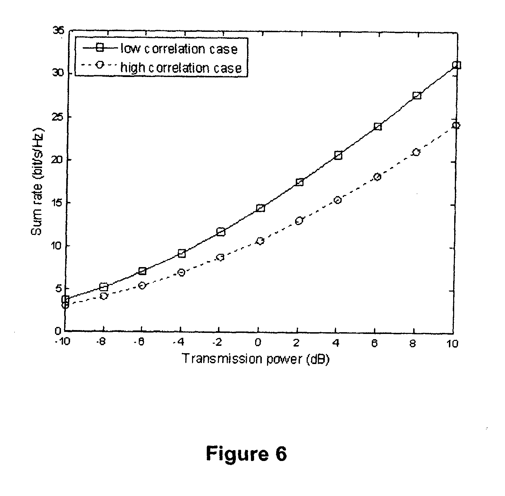

Each channel coefficient is a complex Gaussian coefficient with distribution of *NC*(0,1), which models the small-scale fading only without considering any large-scale fading factors. The calculation of the system sum-rate uses the duality property between the dirty paper region of the MIMO broadcast channels (BC) and the capacity region of the MIMO multiple-access channels (MAC) (see Sriram Vishwanath, Nihar Jindal, Andrea Goldsmith, "Duality, achievable rates, and sum-rate capacity of Gaussian MIMO broadcast channels", IEEE Transactions on Information Theory, vol. 49, no. 10, Oct. 2003). Therefore the system sum-rate of MAC is plotted. Figure 6 shows the simulation results, where the x-axis represents the uplink transmission power at each UE, and y-axis is system sum-rate. The sum-rate is obtained from the system with six UEs being jointly served by three BSs. The variance of the additive white Gaussian noise is 1, and no inter-cluster interference is assumed. From Figure 6, we can see that the orthogonality between the spatial structures of different UEs' MIMO channels plays an important role in the system sum-rate. At the 0dB transmission power point, the low correlation case overperforms the high correlation case by 35%. With increasing transmission power, the gap between the low correlation curve and the high correlation curve is growing. Therefore, the simulation results validate that it is desirable to pair UEs whose MIMO channels have low spatial correlations to each other together to improve the system sum-rate.

**Table 1 Simulation Parameters for Stage 1**

| Parameter | Value |
|---|---|
| BS cooperating set size | 3 |
| Number of antennas per BS | 2 |
| Number of antennas per UE | 1 |
| Number of selected UEs per BS | 2 |
| Small-scale Fading Channel Model | Complex Gaussian distribution *NC*(0,1) |
| Low spatial correlation case | The CMD value is in the range of 0.9 ~ 1.0. |
| High spatial correlation case | The CMD value is in the range of 0.1 ~ 0.2. |

Part 2:

The channel coefficients generated in this part consider the large-scale fading factors. The channel coefficient between the *i*-th UE (assuming single antenna at each UE) and the *j*-th network antenna is generated by:

$$ h_{ij} = \Gamma_{ij} \sqrt{g \gamma_{ij} e L_{ij} P} \tag{40} $$

where $\Gamma_{ij}$ is the complex Gaussian coefficient that models the small-scale fading, $P$ stands for the transmission power for each BS antenna, $g$ is the BS antenna power gain, $\gamma_{ij}$ represents the corresponding log-normal coefficient which models the shadowing of the channel, $e$ denotes the penetration loss of the channel, and $L_{ij}$ is the path-loss between the $i$-th UE and the $j$-th network antenna.

In this simulation, for the proposed scheduling method, at every time slot, local UEs that are associated with each BS are selected using a round-robin criterion and then the BS clustering and UE pairing are accomplished by using the proposed criterion. From one time slot to the next, the BSs within one measurement set are dynamically clustered. For the fixed clustering approach, at every time slot, local UEs that are served by each BS cooperating set are also selected by using the round-robin criterion, and then the BS clustering and UE pairing are realized by using the fixed predefined clustering pattern [see Table 2].

**Table 2 Simulation Parameters for Part 2**

| Parameter | Value |
| --- | --- |
| Site Layout | 7 cells with 3 sectors per cell, hexagonal grid with wrap-around |
| ISD | 500m (3GPP case 1) |
| Carrier frequency | 2.0GHz |
| Operating bandwidth | 10MHz |
| Path-loss model | L=128.1+ 37.6 log10(R); R in km |
| Shadowing distribution | Lognormal |
| Shadowing standard deviation | 8dB |
| Shadowing correlation | Between sectors of different cells: 0.5<br>Between sectors of the same cell: 1.0 |
| BS antenna pattern | Horizontal 3dB beamwidth 70 degrees<br>Vertical 3dB beamwidth 10 degrees, 15 degrees tilt |
| UE location | Cell edge at 260-317m distance from eNB ($0.9r_{Cell} \sim 1.1r_{Cell}$) |
| UEs per sector | 100 users |
| BS transmit power | [10 20 30 40 50 60] dBm |
| Penetration loss | 20dB |
| Noise power spectral density | -174 dBm/Hz |
| UE noise figure | 7 dB |
| BS antenna gain | 14dBi |
| Number of BS antenna per sector | for TX |
| UE antennas | 1 for RX |
| Small-scale Fading Channel Model | Complex Gaussian distribution $NC(0,1)$ |
| Measurement set size | 21 BSs |
| BS cooperating set size | 3 BSs |
| Number of selected UEs per BS | 2 |
| Scheduling criterion for local UEs | Round-robin |
| Fixed BS cooperating cluster pattern | {1 2 3; 4 5 6; 7 8 9; 10 11 12; 13 14 15; 16 17 18; 19 20 21}, see Figure 1 |

For both cases, equations (7) and (8) are used to calculate the averaged achieved sum-rate of one measurement set. The averaging operation used in equation (8) is realized through two steps. First of all, at each time slot, for a certain set of UEs that are involved in the entire cooperating sets, the sum-rate is averaged over an ensemble of the small-scale fading channels of all these UEs. Secondly, the sum-rate obtained from the BSs in one measurement set at each time slot is averaged over a series of time slots. Since at different time slots the network involves different sets of UEs, which have various long-term channel fading properties, the second stage average is actually taken over an ensemble of the large-scale fading channels of the UEs.

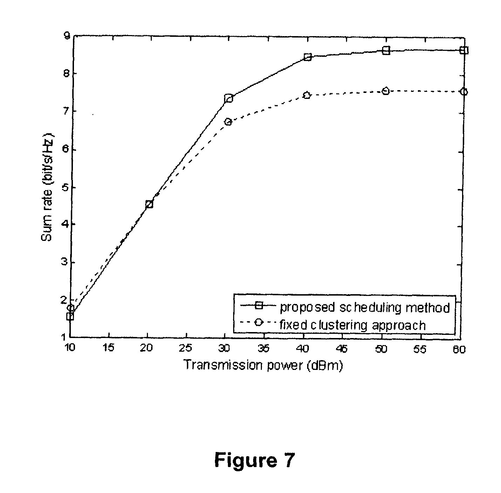

Figure 7 shows the comparison of the averaged achieved system sum-rate by using different clustering approaches. In Figure 7, the x-axis denotes the transmission power used by each BS, the y-axis represents the sum-rate obtained from the BSs in one measurement set. Unit bandwidth is assumed in the simulations and realistic power spectral density of noise is employed. The weighting factors for the coupling weight criterion $\alpha$ and the spatial correlation criterion $\beta$ are both 0.5. It can be seen that for the same BS cooperating cluster size, the proposed dynamic clustering method provides significant sum-rate gains over the fixed clustering approach, since it exploits the properties of MIMO channels in the formation of BS clusters and pairing of cooperative UEs. It shows that the system sum-rate gains are more significant in the high transmission power region, because the system becomes more interference limited and the value of using the proposed scheduling method increases compared to the fixed clustering approach. For the BS that uses 46 dBm as transmission power, which is a typical case in the LTE-A system, Figure 7 shows that the proposed scheduling method has 14.4% performance gain compared to the fixed clustering approach.

The performance gain of the proposed scheduling method can be directly mapped to an energy reduction factor, assuming that the BSs trade the improved sum-rate either for a reduced transmission bandwidth or transmission duration, while maintaining the capacity of the fixed clustering approach. With these assumptions the energy reduction of the proposed method compared to the fixed clustering approach is 14.4%.

Thus, in a multi-cell MIMO scheduling method embodying the present invention, the UE selection and UE pairing stages are decoupled, thereby effectively reducing the complexity of the scheduling algorithm compared to scheduling methods which find the globally optimal scheduling decision through exhaustive search. This reduces the amount of information exchange on the backbone connection and the computational complexity of the scheduling process. Despite the reduced complexity, such a method can outperform a reference approach using fixed BS clusters and can also be used to reduce the energy consumption of the BSs while maintaining the same throughput as obtained with the reference approach.

Embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality described above.

The invention may also be embodied as one or more device or apparatus programs (e.g. computer programs and computer program products) for carrying out part or all of the methods described herein. Such programs embodying the present invention may be stored on computer-readable media, or could, for example, be in the form of one or more signals. Such signals may be data signals downloadable from an Internet website, or provided on a carrier signal, or in any other form.

It will be appreciated that embodiments of the present invention can be applied to any multi-cell MIMO system.

## Claims

1. A method of scheduling coordination among cells in a cellular wireless network for use in multi-cell multiple-input/multiple-output communication with user equipment in the cells, **characterised by**:

   a first scheduling process is carried out by a first scheduler local to a cell to select at least one user equipment, from amongst user equipment within the said cell, to be served by a coordinating group of cells in the network, and a second scheduling process, different from the first scheduling process, is carried out by a second scheduler associated with the said cell and with at least one other cell in the network, in which second scheduling process at least one such group of cells is selected to be a coordinating group of cells for serving the user equipment, selected by the first scheduling process, from amongst a measurement set of B cells in the network, where B $\geq 1$, for which measurements are sent by the selected user equipment;
   the second scheduling process comprising:

   a determining step in which it is determined which group $c_i$ of cells, from a set A consisting of all $C_B^{B_c}$ different possible groups of cells in the measurement set of a predetermined group size $B_c$, where $B_c \leq B$, provides the largest value of a selection parameter $W(c_i)$, which selection parameter is dependent upon at least the long-term link power coupling weights $PW(c_i)$ and spatial correlation weights $d(c_i)$ between user equipment in the said group of cells, where $PW(c_i)$ is the sum of the long-term interference powers measured by each selected user equipment from the first scheduling process in the group $c_i$ in respect of all cells in group $c_i$, and $d(c_i)$ is determined on the basis of spatial correlation matrices derived from user equipment associated with each cell in the group $c_i$ on the basis of either explicit or implicit channel state information; and

a selection step in which the group $c_i$ is selected to be a coordinating group of cells for the selected user equipment.

2. A method as claimed in claim 1, wherein the first scheduling process employs a scheduling criterion chosen from a group comprising round-robin scheduling, proportional fair scheduling and maximum rate scheduling.

3. A method as claimed in claim 1 or 2, wherein the Correlation Matrix Distance metric is used in calculating the spatial correlation weight $d(c_i)$.

4. A method as claimed in claim 1, 2 or 3, wherein the selection parameter $W(c_i)$ is equal to

$$\alpha \cdot \frac{PW(c_i)}{\sum_{c_i \in A} PW(c_i)} + \beta \cdot \frac{d(c_i)}{\sum_{c_i \in A} d(c_i)},$$

$\alpha$ and being weighting factors where $\alpha, \beta \in [0,1]$, $\alpha \neq 0$, $\beta \neq 0$ and $\alpha + \beta = 1$.

5. A method as claimed in claim 1, 2 or 3, wherein, when the number of antennas of the user equipment to be served by a group of cells is less than the total number of BS antennas in the group, the selection parameter $W(c_i)$ is also dependent upon rank information from the user equipment to be served by that group.

6. A method as claimed in claim 5, wherein the selection parameter $W(c_i)$ is equal to

$$\alpha \cdot \frac{PW(c_i)}{\sum_{c_i \in A} PW(c_i)} + \beta \cdot \frac{d(c_i)}{\sum_{c_i \in A} d(c_i)} + \mu \cdot \frac{r(c_i)}{\sum_{c_i \in A} r(c_i)}$$

$\alpha$, $\beta$ and $\mu$ being weighting factors where $\alpha, \beta, \mu \in [0,1]$, $\alpha \neq 0$, $\beta \neq 0$, $\mu \neq 0$ and $\alpha + \beta + \mu = 1$, $r(c_i)$ representing a transmission rank weight among the user equipment in the group $c_i$.

7. A method as claimed in claim 6, wherein $r(c_i)$ is the sum of rank information provided by each user equipment served by the cells in the group $c_i$.

8. A method as claimed in any preceding claim, wherein the determining step of the second scheduling process comprises:

ranking all $C_B^{Bc}$ groups in the set A in descending order according to the selection criterion $W(c_i)$; and

identifying the first group in the rank as the group $c_i$.

9. A method as claimed in any one of claims 1 to 7, wherein the determining step of the second scheduling process comprises:

ranking all $C_B^{Bc}$ groups in the set A in descending order according to the selection criterion $W(c_i)$ and identifying the first group in the rank as the first coordinating group $c_i$; and

for each remaining group in set A in turn, from the second group to the last group $\left(i = 2 \text{ to } C_B^{Bc}\right)$, identifying that group as another coordinating group if that group does not have any cell indices belonging to the or any previously-identified coordinating group.

10. A method as claimed in any one of claims 1 to 8, wherein the second scheduling process carries out the determining and selection steps repeatedly to determine and select one or more further groups $c_i$ from the remaining possible groups of cells of group size $B_c$ until all possible coordinating groups of cells have been identified.

11. Scheduling apparatus (CS) for use in scheduling coordination among cells in a cellular wireless network in a multi-cell multiple-input/muitiple-output communication scheme, **characterised in that** the apparatus is configured for association with at least two cells in the network and is operable to select at least one group of cells, from amongst a measurement set of B cells in the network, where $B \geq 1$, for which measurements are sent by preselected user equipment (UE), to be a coordinating group of cells for serving that user equipment (UE), and **in that** the scheduling apparatus comprises:

determining means (DM) configured to determine which group $c_i$ of cells, from a set A consisting of all $C_B^{B_c}$ different possible groups of cells in the measurement set of a predetermined group size $B_c$, where $B_c \leq B$, provides the largest value of a selection parameter $W(c_i)$, which selection parameter is dependent upon at least the long-term link power coupling weights $PW(c_i)$ and spatial correlation weights $d(c_i)$ between user equipment (UE) in the said group of cells, where $PW(c_i)$ is the sum of the long-term interference powers measured by each preselected user equipment (UE) in the group $c_i$ in respect of all cells in group $c_i$, and $d(c_i)$ is determined on the basis of spatial correlation matrices derived from user equipment (UE) associated with each cell in the group $c_i$ on the basis of either explicit or implicit channel state information; and

selection means (SM) configured to select the group $c_i$ to be a coordinating group of cells for the preselected user equipment. (UE)

12. Scheduling system (SS) for scheduling coordination among cells in a cellular wireless network for use in multi-cell multiple-input/multiple-output communication with user equipment (UE) in the cells, which system is **characterised by**:

first scheduling apparatus (LS) local to a cell, which first scheduling apparatus (LS) is configured to carry out a first scheduling process to select at least one user equipment (UE), from amongst user equipment within the said cell, to be served by a coordinated group of cells in the network, and

second scheduling apparatus (CS), associated with the said cell and with at least one other cell in the network, which second scheduling apparatus (CS) is configured to carry out a second scheduling process, different from the first scheduling process, in which at least one such group of cells is selected to be a coordinating group of cells for serving the user equipment (UE), selected by the first scheduling process, from amongst B cells in the network, where $B \geq 1$, for which measurements are sent by the selected user equipment;

the second scheduling process comprising:

determining which group $c_i$ of cells, from a set A consisting of all $C_B^{B_c}$ different possible groups of cells in the measurement set of a predetermined group size $B_c$, where $B_c \leq B$, provides the largest value of a selection parameter $W(c_i)$, which selection parameter is dependent upon at least the long-term link power coupling weights $PW(c_i)$ and spatial correlation weights $d(c_i)$ between user equipment (UE) in the said group of cells, where $PW(c_i)$ is the sum of the long-term interference powers measured by each selected user equipment (UE) from the first scheduling process in the group $c_i$ in respect of all cells in group $c_i$, and $d(c_i)$ is determined on the basis of spatial correlation matrices derived from user equipment (UE) associated with each cell in the group $c_i$ on the basis of either explicit or implicit channel state information; and

selecting the group $c_i$ to be a coordinating group of cells for the preselected user equipment (UE).

13. A system as claimed in claim 12, wherein a base station (BS) of the said cell within which the selected user equipment (UE) is located serves as the said first scheduling apparatus (LS), which base station (BS) is operable to send to the said second scheduling apparatus (CS) information regarding the long-term link power coupling weights and spatial correlation weights between user equipment (UE) in the said cell, where the information regarding long-term link power coupling weights comprises long-term interference powers measured by the user equipment (UE) and the information regarding spatial correlation weights comprises spatial correlation matrices derived from the user equipment. (UE).

14. A system as claimed in claim 12 or 13, wherein the said second scheduling apparatus (CS) is apparatus as claimed in claim 11.

**15.** A computer program which, when executed on a computer, causes that computer to carry out a method as claimed in any one of claims 1 to 10.

**Patentansprüche**

**1.** Verfahren für ein Scheduling von Koordination unter Zellen in einem Mobilfunknetz für Anwendung in einer Mehrzellen-Multiple-Input/Multiple-Output-Kommunikation mit Teilnehmergeräten in den Zellen, **gekennzeichnet durch** Folgendes:

ein erster Schedulingvorgang wird von einem ersten Scheduler lokal für eine Zelle ausgeführt, um wenigstens ein Teilnehmergerät aus Teilnehmergeräten innerhalb der Zelle für Bedienung **durch** eine Koordinationsgruppe von Zellen im Netz auszuwählen. Und

ein zweiter Schedulingvorgang, der sich vom ersten Schedulingvorgang unterscheidet, wird von einem zweiten Scheduler, der der Zelle und wenigstens einer anderen Zelle im Netz zugeordnet ist, ausgeführt, wobei beim zweiten Schedulingvorgang wenigstens eine solche Gruppe von Zellen ausgewählt wird, um eine Koordinationsgruppe von Zellen für Bedienung der vom ersten Schedulingvorgang ausgewählten Teilnehmergeräte zu sein, von einem Messsatz von B Zellen im Netz, wobei $B \geq 1$, für die Messungen vom ausgewählten Teilnehmergerät gesendet werden;

wobei der Schedulingvorgang Folgendes aufweist:

einen Bestimmungsschritt, in dem bestimmt wird, welche Gruppe $c_i$ von Zellen aus einem Satz A, bestehend aus allen $C_B^{B_c}$ verschiedenen möglichen Gruppen von Zellen im Messsatz einer im Voraus bestimmten Gruppengröße $B_c$, wobei $B_c \leq B$, den größten Wert eines Auswählparameters $W(c_i)$ bereitstellt, welcher Auswählparameter abhängig ist von wenigstens den langfristigen Verknüpfungsleistungsverbindungsgewichten $PW(c_i)$ und räumlichen Korrelationsgewichten $d(c_i)$ zwischen Teilnehmergeräten in der Gruppe von Zellen, wobei $PW(c_i)$ die Summe der langfristigen Störleistungen, gemessen von jedem ausgewählten Teilnehmergerät vom ersten Schedulingvorgang in der Gruppe $c_i$ im Hinblick auf alle Zellen in der Gruppe $c_i$ ist und $d(c_i)$ auf der Basis von räumlichen Korrelationsmatrizen, die von jeder Zelle in der Gruppe $c_i$ auf der Basis von entweder expliziter oder impliziter Kanalstatusinformation abgeleitet sind, bestimmt ist; und

einen Auswählschritt, in dem die Gruppe $c_i$ als eine Koordinationsgruppe von Zellen für das ausgewählte Teilnehmergerät ausgewählt wird.

**2.** Verfahren nach Anspruch 1, wobei der erste Schedulingvorgang ein Schedulingkriterium ausgewählt aus einer Gruppe aufweisend Round-Robin-Scheduling, Proportional-Fair-Scheduling und Maximum-Rate-Scheduling einsetzt.

**3.** Verfahren nach Anspruch 1 oder 2, wobei die Korrelationsmatrix-Abstandsmetrik bei der Berechnung des räumlichen Korrelationsgewichts $d(c_i)$ angewandt wird.

**4.** Verfahren nach Anspruch 1, 2 oder 3, wobei der Auswählparameter $W(c_i)$ gleich Folgender Formel ist:

$$\alpha \cdot \frac{PW(c_i)}{\sum_{c_i \in A} PW(c_i)} + \beta \cdot \frac{d(c_i)}{\sum_{c_i \in A} d(c_i)},$$

wobei $\alpha$ und $\beta$ Gewichtungsfaktoren sind, wobei $\alpha, \beta \in [0,1]$, $\alpha \neq 0$, $\beta \neq 0$ und $\alpha + \beta = 1$.

**5.** Verfahren nach Anspruch 1, 2 oder 3, wobei die Anzahl von Antennen der zu bedienenden Teilnehmergeräte niedriger ist als die Gesamtanzahl von B5-Antennen in der Gruppe, wobei der Auswählparameter $W(c_i)$ auch von der Rankinginformation vom durch diese Gruppe zu bedienenden Teilnehmergerät abhängig ist.

**6.** Verfahren nach Anspruch 5, wobei der Auswählparameter $W(c_i)$ gleich Folgender Formel ist:

$$\alpha \cdot \frac{PW(c_i)}{\sum\limits_{c_i \in A} PW(c_i)} + \beta \cdot \frac{d(c_i)}{\sum\limits_{c_i \subset A} d(c_i)} + \mu \cdot \frac{r(c_i)}{\sum\limits_{c_i \in A} r(c_i)}$$

wobei $\alpha$, $\beta$ und $\mu$ Gewichtungsfaktoren sind, wobei $\alpha$, $\beta$, $\mu \in [0,1]$, $\alpha \neq 0$, $\beta \neq 0$, $\mu \neq 0$ und $\alpha + \beta + \mu = 1$, $r(c_i)$ ein Übertragungsrankinggewicht unter den Teilnehmergeräten in der Gruppe $c_i$ darstellt.

7. Verfahren nach Anspruch 6, wobei $r(c_i)$ die Summe der Rankinginformation ist, die von jedem der von den Zellen in der Gruppe $c_i$ bedienten Endgeräte bereitgestellt wird.

8. Verfahren nach einem der vorgehenden Ansprüche, wobei der Bestimmungsschritt des zweiten Schedulingvorgangs Folgendes aufweist:

Ranking aller $C_B^{Bc}$ Gruppen im Satz A in absteigender Reihenfolge gemäß dem Auswählkriterium $W(c_i)$; und

Identifizieren der ersten Gruppe im Ranking als die Gruppe $c_i$.

9. Verfahren nach einem der Ansprüche 1 bis 7, wobei der Bestimmungsschritt des zweiten Schedulingvorgangs Folgendes aufweist:

Ranking aller $C_B^{Bc}$ Gruppen im Satz A in absteigender Reihenfolge gemäß dem Auswählkriterium $W(c_i)$ und

Identifizieren der ersten Gruppe im Ranking als die Koordinationsgruppe $c_i$; und

für jede verbliebene Gruppe im Satz A wiederum, von der zweiten Gruppe bis zur letzten Gruppe (1 = 2 bis $C_B^{Bc}$), Identifizieren der Gruppe als eine andere Koordinationsgruppe, wenn diese Gruppe keine zu einer vorher identifizierten Koordinationsgruppe gehörenden Zellenanzeigen aufweist.

10. Verfahren nach einem der Ansprüche 1 bis 8, wobei der zweite Schedulingvorgang die Bestimmungs- und Auswählschritte wiederholt ausführt, um eine oder mehrere weitere Gruppen $c_i$ aus der verbliebenen möglichen Gruppe von Zellen der Gruppengröße $B_C$ zu bestimmen und auszuwählen, bis alle möglichen Koordinationsgruppen von Zellen identifiziert worden sind.

11. Schedulingvorrichtung (CS) für Anwendung in einer Scheduling unter Zellen in einem Koordinationsscheduling unter Zellen in einem Mobilfunknetz für Anwendung in einem Mehrzellen-Multiple-Input/Multiple-Output-Kommunikationsschema, **dadurch gekennzeichnet, dass** die Vorrichtung für eine Zuordnung von wenigstens zwei Zellen im Netz konfiguriert und operabel ist für ein Auswählen von wenigstens einer Gruppe von Zellen aus einem Messsatz von B Zellen, wobei $B \geq 1$, für die Messungen durch im Voraus bestimmte Teilnehmergeräte (UE), um eine Koordinationsgruppe von Zellen für Bedienen dieser Teilnehmergeräte (UE) zu sein, die Schedulingvorrichtung Folgendes aufweist:

Bestimmungsmittel (DM), konfiguriert für ein Bestimmen, welche Gruppe $c_i$ von Zellen aus einem Satz A, der aus allen $C_B^{Bc}$ verschiedenen möglichen Gruppen von Zellen im Messsatz einer im Voraus bestimmten Gruppengröße $B_c$, wobei $B_c \leq B$, besteht, den höchsten Wert eines Auswählparameters $W(c_i)$ bereitstellt, wobei der Auswählparameter abhängig ist von wenigstens den langfristigen Verknüpfungsleistungsverbindungsgewichten $PW(c_i)$ und räumlichen Korrelationsgewichten $d(c_i)$ zwischen Teilnehmergeräten (UE) in der Gruppe von Zellen, wobei $PW(c_i)$ die Summe der langfristigen Störleistungen ist, gemessen von jedem im Voraus bestimmten Teilnehmergerät (UE) in der Gruppe $c_i$ im Hinblick auf alle Zellen in der Gruppe $c_i$ und $d(c_i)$ auf der Basis von räumlichen Korrelationsmatrizen, die abgeleitet sind von Teilnehmergeräten (UE), die jeder Zelle in der Gruppe $c_i$ auf der Basis von entweder expliziter oder impliziter Kanalstatusinformation zugeordnet sind; und

Auswählmittel (SM), konfiguriert für Auswählen der Gruppe $c_i$, um eine Koordinationsgruppe von Zellen für die im Voraus ausgewählten Teilnehmergeräte (UE) zu sein.

12. Schedulingsystem (SS) für ein Scheduling von Koordination unter Zellen in einem Mobilfunknetz für Anwendung in einer Mehrzellen-Multiple-Input/Multiple-Output-Kommunikation mit Teilnehmergeräten (UE) in den Zellen, wobei das System durch Folgendes gekennzeichnet ist:

eine erste Schedulingvorrichtung (LS), die lokal für eine Zelle ist, wobei die erste Schedulingvorrichtung (LS) konfiguriert ist für ein Ausführen eines ersten Schedulingvorgangs zum Auswählen von wenigstens einem Teilnehmergerät (UE) aus Teilnehmergeräten innerhalb der Zelle, um von einer koordinierten Gruppe von Zellen im Netz bedient zu werden, und

eine zweite Schedulingvorrichtung (CS), die der Zelle und wenigstens einer weiteren Zelle im Netz zugeordnet ist, wobei die zweite Schedulingvorrichtung (CS) konfiguriert ist für ein Ausführen eines zweiten Schedulingvorgangs, der sich vom ersten Schedulingvorgang unterscheidet, wobei wenigstens eine solche Gruppe von Zellen ausgewählt wird, um eine Koordinationsgruppe von Zellen für ein Bedienen der Teilnehmergeräte (UE) zu sein, die durch der ersten Schedulingvorgang ausgewählt worden sind, von unter B Zellen im Netz, wobei B ≥ 1, für die Messungen durch das ausgewählte Teilnehmergerät (UE) gesandt werden;
wobei der zweite Schedulingvorgang Folgendes aufweist:

Bestimmen, welche Gruppe $c_i$ von Zellen aus einem Satz A, der aus allen $C_B^{B_c}$ verschiedenen möglichen Gruppen von Zellen im Messsatz einer im Voraus bestimmten Gruppengröße $B_c$, wobei $B_c \leq B$, besteht, den höchsten Wert eines Auswählparameters $W(c_i)$ bereitstellt, wobei der Auswählparameter abhängig ist von wenigstens den langfristigen
Verknüpfungsleistungsverbindungsgewichten $PW(c_i)$ und räumlichen Korrelationsgewichten $d(c_i)$ zwischen Teilnehmergeräten (UE) in der Gruppe von Zellen, wobei $PW(c_i)$ die Summe der langfristigen Störleistungen ist, gemessen von jedem ausgewählten Teilnehmergerät (UE) aus dem ersten Schedulingvorgang in der Gruppe $c_i$ im Hinblick auf alle Zellen in der Gruppe $c_i$, und $d(c_i)$ auf der Basis von räumlichen Korrelationsmatrizen, die abgeleitet sind von Teilnehmergeräten (UE), die jeder Zelle in der Gruppe $c_i$ auf der Basis von entweder expliziter oder impliziter Kanalstatusinformation zugeordnet sind, bestimmt ist; und
Auswählen der Gruppe $c_i$, um eine Koordinationsgruppe von Zellen für die im Voraus ausgewählten Teilnehmergeräte (UE) zu sein.

13. System nach Anspruch 12, wobei eine Basisstation (BS) der Zelle, innerhalb der sich das ausgewählte Teilnehmergerät (UE) befindet, als die erste Schedulingvorrichtung (LS) dient, wobei die Basisstation (BS) für ein Senden der Information von der zweiten Schedulingvorrichtung (CS) bezüglich der langfristigen Verknüpfungsleistungsverbindungsgewichte und räumlichen Korrelationsgewichte zwischen Teilnehmergeräten (UE) in der Zelle operabel ist, wobei die Information über langfristigen Verknüpfungsleistungsverbindungsgewichte langfristige Störleistungen, gemessen vom Teilnehmergerät (UE), und Information über die räumlichen Korrelationsgewichte räumliche Korrelationsmatrizen, die vom Teilnehmergerät (UE) abgeleitet ist, aufweist.

14. System nach Anspruch 12 oder 13, wobei die zweite Schedulingvorrichtung (CS) eine Vorrichtung nach Anspruch 11 ist.

15. Computerprogramm, das bei Ausführen von einem Computer ein Ausführen eines Verfahrens nach einem der Ansprüche 1 bis 10 bewirkt.

**Revendications**

1. Procédé d'ordonnancement de coordination parmi des cellules dans un réseau sans fil cellulaire devant être utilisé dans une communication à entrées/sorties multiples entre de multiples cellules, avec un équipement d'utilisateur dans les cellules, **caractérisé en ce que** :

un premier processus d'ordonnancement est exécuté par un premier dispositif d'ordonnancement local pour une cellule pour sélectionner au moins un équipement d'utilisateur, parmi les équipements d'utilisateur dans ladite cellule, devant être desservi par un groupe de coordination de cellules dans le réseau, et
un second processus d'ordonnancement différent du premier processus d'ordonnancement est exécuté par un second dispositif d'ordonnancement associé à ladite cellule et au moins à une autre cellule du réseau, second processus d'ordonnancement dans lequel au moins un tel groupe de cellules est sélectionné pour être un groupe de coordination de cellules desservant l'équipement d'utilisateur, sélectionné par le premier processus d'ordonnancement, parmi un ensemble de mesures de B cellules dans le réseau, où B ≥ 1, pour lequel des mesures sont envoyées par l'équipement d'utilisateur sélectionné ;
le second processus d'ordonnancement comprenant :

une étape de détermination au cours de laquelle il est déterminé quel groupe $c_i$ de cellules, parmi un ensemble A constitué de tous les $C_B^{B_c}$ différents groupes possibles de cellules dans l'ensemble de mesures d'une taille de groupe prédéterminée, $B_c$, où $B_c \leq B$, fournit la plus grande valeur d'un paramètre de sélection $W(c_i)$, le paramètre de sélection étant dépendant d'au moins les poids de couplage de puissance de liaison à long terme $PW(c_i)$ et des poids de corrélation spatiale $d(c_i)$ parmi un équipement d'utilisateur dans ledit groupe de cellules, $PW(c_i)$ étant la somme des puissances d'interférence à long terme mesurées par chaque équipement d'utilisateur sélectionné par le premier processus d'ordonnancement dans le groupe $c_i$ par rapport à toutes les cellules du groupe $c_i$ et $d(c_i)$ étant déterminé sur la base des matrices de corrélation spatiale déduites de l'équipement d'utilisateur associé à chaque cellule dans le groupe $c_i$ sur la base des informations d'état de canal explicite ou implicite ; et

une étape de sélection au cours de laquelle le groupe $c_i$ est sélectionné pour être un groupe de coordination de cellules pour l'équipement d'utilisateur sélectionné.

2. Procédé selon la revendication 1, dans lequel le premier processus d'ordonnancement utilise un critère d'ordonnancement choisi dans un groupe comprenant un ordonnancement à tour de rôle, un ordonnancement proportionnel équitable et un ordonnancement à vitesse maximale.

3. Procédé selon la revendication 1 ou 2, dans lequel la métrique de distance de matrice de corrélation est utilisée pour calculer le poids de corrélation spatiale $d(c_i)$.

4. Procédé selon la revendication 1, 2 ou 3, dans lequel le paramètre de sélection $W(c_i)$ est égal à

$$\alpha = \frac{PW(c_i)}{\sum_{c_i \in A} PW(c_i)} + \beta \frac{d(c_i)}{\sum_{c_i \in A} d(c_i)}$$

$\alpha$ et $\beta$ étant des facteurs de pondération, où $\alpha$, $\beta \in [0,1]$, $\alpha \neq 0$, $\beta \neq 0$ et $\alpha + \beta = 1$.

5. Procédé selon la revendication 1, 2 ou 3, dans lequel, lorsque le nombre d'antennes de l'équipement d'utilisateur devant être desservi par un groupe de cellules est inférieur au nombre total d'antennes de BS dans le groupe, le paramètre de sélection $W(c_i)$ dépend également des informations de rang de l'équipement d'utilisateur devant être desservi par ce groupe.

6. Procédé selon la revendication 5, dans lequel le paramètre de sélection $W(c_i)$ est égal à

$$\alpha = \frac{PW(c_i)}{\sum_{c_i \in A} PW(c_i)} + \beta \frac{d(c_i)}{\sum_{c_i \in A} d(c_i)} + \mu \frac{r(c_i)}{\sum_{c_i \in A} r(c_i)}$$

$\alpha$, $\beta$ et $\mu$ étant des facteurs de pondération où $\alpha$, $\beta$, $\mu \in [0,1]$, $\alpha \neq 0$, $\beta \neq 0$, $\mu \neq 0$ et $\alpha + \beta + \mu = 1$, $r(c_i)$ représentant un poids de rang de transmission parmi les équipements d'utilisateurs du groupe $c_i$.

7. Procédé selon la revendication 6, dans lequel $r(c_i)$ est la somme des informations de rang fournies par chaque équipement d'utilisateur desservi par les cellules du groupe $c_i$.

8. Procédé selon l'une quelconque des revendications précédentes, dans lequel l'étape de détermination du second processus d'ordonnancement comprend :

le rangement de tous les groupes $C_B^{B_c}$ dans l'ensemble A en ordre descendant en fonction du critère de sélection $W(c_i)$ ; et

l'identification du premier groupe dans le rang en tant que groupe $c_i$.

9. Procédé selon l'une quelconque des revendications 1 à 7, dans lequel l'étape de détermination du second processus d'ordonnancement comprend :

le rangement de tous les groupes $C_B^{B_c}$ dans l'ensemble A en ordre descendant en fonction du critère de sélection W($c_i$) et l'identification du premier groupe dans le rang en tant que premier groupe de coordination $c_i$ ; et pour chaque groupe restant de l'ensemble A à son tour, du second groupe jusqu'au dernier groupe $(i = 2 \text{ à } C_B^{B_c})$, l'identification de ce groupe comme autre groupe de coordination si ce groupe ne possède aucun indice de cellule appartenant au groupe de coordination ou à un quelconque groupe de coordination identifié précédemment.

10. Procédé selon l'une quelconque des revendications 1 à 8, dans lequel le second processus d'ordonnancement exécute les étapes de détermination et de sélection de façon répétée pour déterminer et sélectionner un ou plusieurs autres groupes $c_i$ d'après les groupes de cellules possibles restants de la taille de groupe $B_c$ jusqu'à ce que tous les groupes de coordination de cellules possibles aient été identifiés.

11. Dispositif d'ordonnancement (CS) devant être utilisé dans une coordination d'ordonnancement parmi des cellules dans un réseau sans fil cellulaire dans un schéma de communication à entrées/sorties multiples entre de multiples cellules, **caractérisé en ce que** le dispositif est configuré pour une association avec au moins deux cellules dans le réseau et peut être actionné pour sélectionner au moins un groupe de cellules, parmi un ensemble de mesures de B cellules dans le réseau, où B ≥ 1, pour lequel des mesures sont envoyées par un équipement d'utilisateur présélectionné (UE) pour être un groupe de coordination de cellules desservant cet équipement d'utilisateur (UE), et **en ce que** le dispositif d'ordonnancement comprend :

un moyen de détermination (DM), configuré pour déterminer quel groupe $c_i$ de cellules, parmi un ensemble A constitué de tous les $C_B^{B_c}$ différents groupes possibles de cellules dans l'ensemble de mesures d'une taille de groupe prédéterminée, $B_c$, où $B_c \leq B$, fournit la plus grande valeur d'un paramètre de sélection W($c_i$), le paramètre de sélection étant dépendant d'au moins les poids de couplage de puissance de liaison à long terme PW($c_i$) et des poids de corrélation spatiale d($c_i$) parmi un équipement d'utilisateur (UE) dans ledit groupe de cellules, PW($c_i$) étant la somme des puissances d'interférence à long terme mesurées par chaque équipement d'utilisateur présélectionné (UE) dans le groupe $c_i$ par rapport à toutes les cellules du groupe $c_i$ et d($c_i$) étant déterminé sur la base des matrices de corrélation spatiale déduites de l'équipement d'utilisateur (UE) associé à chaque cellule dans le groupe $c_i$ sur la base des informations d'état de canal explicite ou implicite ; et

un moyen de sélection (SM), configuré pour sélectionner le groupe $c_i$ pour être un groupe de coordination de cellules pour l'équipement d'utilisateur présélectionné (UE).

12. Système d'ordonnancement (SS) pour effectuer un ordonnancement de coordination parmi des cellules dans un réseau sans fil cellulaire devant être utilisé dans une communication à entrées/sorties multiples entre de multiples cellules, avec un équipement d'utilisateur (UE) dans les cellules, système **caractérisé par** :

un premier dispositif d'ordonnancement (LS) local pour une cellule, le premier dispositif d'ordonnancement (LS) étant configuré pour exécuter un premier processus d'ordonnancement pour sélectionner au moins un équipement d'utilisateur, parmi les équipements d'utilisateur dans ladite cellule, devant être desservi par un groupe de cellules coordonnées dans le réseau, et

un second dispositif d'ordonnancement (CS), associé à ladite cellule et au moins à une autre cellule du réseau, le second dispositif d'ordonnancement (CS) étant configuré pour exécuter un second processus d'ordonnancement, différent du premier processus d'ordonnancement, dans lequel au moins un tel groupe de cellules est sélectionné pour être un groupe de coordination de cellules desservant l'équipement d'utilisateur (UE), sélectionné par le premier processus d'ordonnancement, parmi B cellules dans le réseau, où B ≥ 1, pour lequel des mesures sont envoyées par l'équipement d'utilisateur sélectionné ;

le second processus d'ordonnancement comprenant :

la détermination du groupe $c_i$ de cellules, parmi un ensemble A constitué de tous les $C_B^{B_c}$ différents groupes possibles de cellules dans l'ensemble de mesures d'une taille de groupe prédéterminée, $B_c$, où $B_c \leq B$, qui fournit la plus grande valeur d'un paramètre de sélection W($c_i$), le paramètre de sélection étant dépendant d'au moins les poids de couplage de puissance de liaison à long terme PW($c_i$) et des poids de corrélation spatiale d($c_i$) parmi un équipement d'utilisateur (UE) dans ledit groupe de cellules, PW($c_i$) étant la somme

des puissances d'interférence à long terme mesurées par chaque équipement d'utilisateur (UE) sélectionné par le premier processus d'ordonnancement dans le groupe $c_i$ par rapport à toutes les cellules du groupe $c_i$ et $d(c_i)$ étant déterminé sur la base des matrices de corrélation spatiale déduites de l'équipement d'utilisateur (UE) associé à chaque cellule dans le groupe $c_i$ sur la base des informations d'état de canal explicite ou implicite ; et

la sélection du groupe $c_i$ pour être un groupe de coordination de cellules pour l'équipement d'utilisateur (UE) présélectionné.

13. Système selon la revendication 12, dans lequel une station de base (BS) de ladite cellule à l'intérieur de laquelle est situé l'équipement d'utilisateur sélectionné (UE) dessert ledit premier dispositif d'ordonnancement (LS), station de base (BS) qui peut être actionnée pour envoyer audit second dispositif d'ordonnancement (CS) des informations concernant les poids de couplage de puissance de liaison à long terme et les poids de corrélation spatiale parmi un équipement d'utilisateur (UE) dans ladite cellule, où les informations concernant les poids de couplage de puissance de liaison à long terme comprennent les puissances d'interférence à long terme mesurées par l'équipement d'utilisateur (UE) et les informations concernant les poids de corrélation spatiale comprennent des matrices de corrélation spatiale déduites de l'équipement d'utilisateur (UE).

14. Système selon la revendication 12 ou 13, dans lequel ledit second dispositif d'ordonnancement (CS) est un dispositif selon la revendication 11.

15. Programme informatique qui, lorsqu'il est exécuté sur un ordinateur, fait effectuer par cet ordinateur un procédé selon l'une quelconque des revendications 1 à 10.

Figure 1

**Figure 2**

Select local UEs for particular BS — STEP 1

Specify size $B_c$ of each group — STEP 2

Set G={1,2,...,B} and Ω=Φ — STEP 3(a)

Rank all $C_B^{B_c}$ (=$N_C$) possible groups of size $B_C$ into a set A={$c_1,c_2,...,c_{NC}$} in descending order of W($c_i$) — STEP 3(b)

Select the group $c_i$ with largest W($c_i$) — STEP 4

Set Ω to Ω + $c_i$, G to G - $c_i$ and B to B-$B_C$ — STEP 5

Is G=Φ? — STEP 6

NO

YES

END

First scheduling process

Second scheduling process

Figure 3(a)

**Figure 3(b)**

Measurement Set (Size B BSs)

| Cell/BS 1 | Cell/BS 2 | | Cell/BS B |
|---|---|---|---|
| **Local Scheduler:** **Local UE Selection** | **Local Scheduler:** **Local UE Selection** | . . . | **Local Scheduler:** **Local UE Selection** |

Interference Power Weight
Factors (IP), Spatial       — — — —
Structure Information ($\Psi$)

| **Central Scheduler** |
|---|

Weighting Factors
$\alpha$ and $\beta$

Scheduling Decisions    — — — —

| **Local Scheduler** | **Local Scheduler** | . . . | **Local Scheduler** |
|---|---|---|---|

Cooperating Set/Cluster 1
(Size $B_C$ BSs)

Cooperating Set/Cluster B/$B_C$
(Size $B_C$ BSs)

**Figure 4**

Figure 5

**Figure 6**

**Figure 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007083185 A2
- US 2009238292 A1
- EP 2051401 A
- CN 101389115 A
- WO 2009024018 A1
- WO 2009140898 A1

**Non-patent literature cited in the description**

- Further advancements for E-UTRA physical layer aspects (Release 9). *3GPP TR 36.814,* September 2009
- Adaptive Cell Clustering for CoMP in LTE-A. 3GPP standards contribution. Hitachi Ltd, May 2009
- CoMP performance evaluation. *The 3GPP standards contribution,* February 2010
- **DAVID GESBERT ; ERIC HARDOUIN.** A dynamic clustering approach in wireless networks with multi-cell cooperative processing. *International Conference on Communications,* May 2008
- Adaptive Cell Clustering for CoMP in LTE-A. *3GPP R1-091903*
- Correlation matrix distance, a meaningful measure for evaluation of non-stationary MIMO channels. **M. HERDIN ; N. CZINK ; H. OZCELIK ; E. BONEK.** IEEE 61st Vehicular Technology Conference. VTC Spring, 01 May 2005, 136-140
- **SRIRAM VISHWANATH ; NIHAR JINDAL ; ANDREA GOLDSMITH.** Duality, achievable rates, and sum-rate capacity of Gaussian MIMO broadcast channels. *IEEE Transactions on Information Theory,* October 2003, vol. 49 (10